# EUROPÄISCHE PATENTSCHRIFT

(11) **EP 3 423 766 B1**
(45) Veröffentlichungstag und Bekanntmachung des Hinweises auf die Patenterteilung: **07.08.2024**
(21) Anmeldenummer: 17707860.7
(22) Anmeldetag: 28.02.2017
(51) Int. Cl.: F25B 43/04, F25B 25/00, F25B 49/02, F25B 30/02

(54) **WÄRMEPUMPE MIT EINER GASFALLE, VERFAHREN ZUM BETREIBEN EINER WÄRMEPUMPE MIT EINER GASFALLE UND VERFAHREN ZUM HERSTELLEN EINER WÄRMEPUMPE MIT EINER GASFALLE**
HEAT PUMP WITH A GAS TRAP, METHOD FOR OPERATING A HEAT PUMP WITH A GAS TRAP, AND METHOD FOR PRODUCING A HEAT PUMP WITH A GAS TRAP
POMPE À CHALEUR DOTÉE D'UN PIÈGE À GAZ, PROCÉDÉ DE FONCTIONNEMENT D'UNE POMPE À CHALEUR DOTÉE D'UN PIÈGE À GAZ ET PROCÉDÉ DE FABRICATION D'UNE POMPE À CHALEUR DOTÉE D'UN PIÈGE À GAZ

(30) Priorität: 02.03.2016 DE 102016203410
(43) Veröffentlichungstag der Anmeldung: 09.01.2019
(73) Patentinhaber: Vertiv S.r.l., 35010 Piove di Sacco, (PD) (IT)
(72) Erfinder: KNIFFLER, Oliver, 82054 Sauerlach (DE); SEDLAK, Holger, 82054 Lochhofen / Sauerlach (DE)
(74) Vertreter: Wunderlich & Heim Patentanwälte PartG mbB
(86) Internationale Anmeldenummer: PCT/EP2017/054629
(87) Internationale Veröffentlichungsnummer: WO 2017/148936

(56) Entgegenhaltungen:
- WO-A1-2014/179032
- US-A- 2 986 894
- US-A- 3 145 544
- US-A- 3 620 038

## Beschreibung

Die vorliegende Erfindung bezieht sich auf Wärmepumpen zum Heizen, Kühlen oder für eine sonstige Anwendung einer Wärmepumpe.

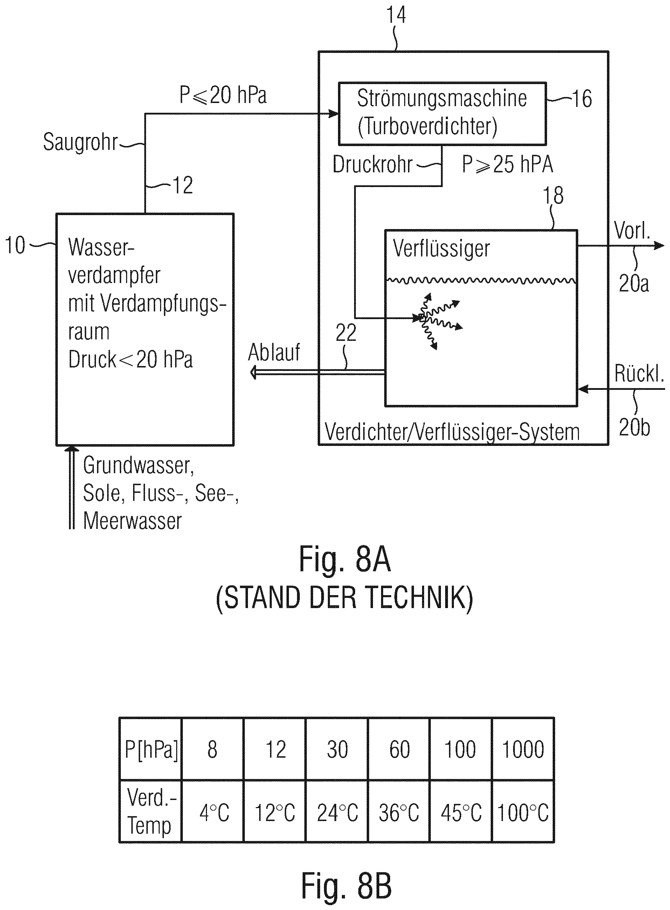

Fig. 8A und Fig. 8B stellen eine Wärmepumpe dar, wie sie in dem europäischen Patent EP 2016349 B1 beschrieben ist. Die Wärmepumpe umfasst zunächst einen Verdampfer 10 zum Verdampfen von Wasser als Arbeitsflüssigkeit, um ausgangsseitig einen Dampf in einer Arbeitsdampfleitung 12 zu erzeugen. Der Verdampfer umfasst einen Verdampfungsraum (in Fig. 8A nicht gezeigt) und ist ausgebildet, um in dem Verdampfungsraum einen Verdampfungsdruck kleiner als 20 hPa zu erzeugen, so dass das Wasser bei Temperaturen unter 15 °C im Verdampfungsraum verdampft. Das Wasser ist z.B. Grundwasser, im Erdreich frei oder in Kollektorrohren zirkulierende Sole, also Wasser mit einem bestimmten Salzgehalt, Flusswasser, Seewasser oder Meerwasser. Es können alle Arten von Wasser, also kalkhaltiges Wasser, kalkfreies Wasser, salzhaltiges Wasser oder salzfreies Wasser verwendet werden. Dies liegt daran, dass alle Arten von Wasser, also alle diese "Wasserstoffe", die günstige Wasser-Eigenschaft haben, nämlich dass Wasser, das auch als "R 718" bekannt ist, ein für den Wärmepumpen-Prozess nutzbares Enthalpie-Differenz-Verhältnis von 6 hat, was dem mehr als 2-fachen des typischen nutzbaren Enthalpie-Differenz-Verhältnisses von z.B. R134a entspricht.

Der Wasserdampf wird durch die Saugleitung 12 einem Verdichter/Verflüssiger-System 14 zugeführt, das eine Strömungsmaschine wie z.B. einen Radialverdichter, beispielsweise in Form eines Turboverdichters aufweist, der in Fig. 8A mit 16 bezeichnet ist. Die Strömungsmaschine ist ausgebildet, um den Arbeitsdampf auf einen Dampfdruck zumindest größer als 25 hPa zu verdichten. 25 hPa korrespondiert mit einer Verflüssigungstemperatur von etwa 22 °C, was zumindest an relativ warmen Tagen bereits eine ausreichende Heizungs-Vorlauftemperatur einer Fußbodenheizung sein kann. Um höhere Vorlauftemperaturen zu generieren, können Drücke größer als 30 hPa mit der Strömungsmaschine 16 erzeugt werden, wobei ein Druck von 30 hPa eine Verflüssigungstemperatur von 24 °C hat, ein Druck von 60 hPa eine Verflüssigungstemperatur von 36 °C hat, und ein Druck von 100 hPa einer Verflüssigungstemperatur von 45 °C entspricht. Fußbodenheizungen sind ausgelegt, um mit einer Vorlauftemperatur von 45 °C auch an sehr kalten Tagen ausreichend heizen zu können.

Die Strömungsmaschine ist mit einem Verflüssiger 18 gekoppelt, der ausgebildet ist, um den verdichteten Arbeitsdampf zu verflüssigen. Durch das Verflüssigen wird die in dem Arbeitsdampf enthaltene Energie dem Verflüssiger 18 zugeführt, um dann über den Vorlauf 20a einem Heizsystem zugeführt zu werden. Über den Rücklauf 20b fließt das Arbeitsfluid wieder in den Verflüssiger zurück.

Erfindungsgemäß wird es bevorzugt, dem energiereichen Wasserdampf direkt durch das kältere Heizungswasser die Wärme (-energie) zu entziehen, welche vom Heizungswasser aufgenommen wird, so dass dieses sich erwärmt. Dem Dampf wird hierbei so viel Energie entzogen, dass dieser verflüssigt wird und ebenfalls am Heizungskreislauf teilnimmt.

Damit findet ein Materialeintrag in den Verflüssiger bzw. das Heizungssystem statt, der durch einen Ablauf 22 reguliert wird, derart, dass der Verflüssiger in seinem Verflüssigerraum einen Wasserstand hat, der trotz des ständigen Zuführens von Wasserdampf und damit Kondensat immer unterhalb eines Maximalpegels bleibt.

Wie es bereits ausgeführt worden ist, wird es bevorzugt, einen offenen Kreislauf zu nehmen, also das Wasser, das die Wärmequelle darstellt, direkt ohne Wärmetauscher zu verdampfen. Alternativ könnte jedoch auch das zu verdampfende Wasser zunächst über einen Wärmetauscher von einer externen Wärmequelle aufgeheizt werden. Darüber kann, um auch Verluste für den zweiten Wärmetauscher, der auf Verflüssiger-Seite bisher notwendigerweise vorhanden ist, zu vermeiden, auch dort das Medium direkt verwendet, werden, wenn an ein Haus mit Fußbodenheizung gedacht wird, das Wasser, das von dem Verdampfer stammt, direkt in der Fußbodenheizung zirkulieren zu lassen.

Alternativ kann jedoch auch auf Verflüssiger-Seite ein Wärmetauscher angeordnet werden, der mit dem Vorlauf 20a gespeist wird und der den Rücklauf 20b aufweist, wobei dieser Wärmetauscher das im Verflüssiger befindliche Wasser abkühlt und damit eine separate Fußbodenheizungsflüssigkeit, die typischerweise Wasser sein wird, aufheizt.

Aufgrund der Tatsache, dass als Arbeitsmedium Wasser verwendet wird, und aufgrund der Tatsache, dass von dem Grundwasser nur der verdampfte Anteil in die Strömungsmaschine eingespeist wird, spielt der Reinheitsgrad des Wassers keine Rolle. Die Strömungsmaschine wird, genauso wie der Verflüssiger und die ggf. direkt gekoppelte Fußbodenheizung immer mit destilliertem Wasser versorgt, derart, dass das System im Vergleich zu heutigen Systemen einen reduzierten Wartungsaufwand hat. Anders ausgedrückt ist das System selbstreinigend, da dem System immer nur destilliertes Wasser zugeführt wird und das Wasser im Ablauf 22 somit nicht verschmutzt ist.

Darüber hinaus sei darauf hingewiesen, dass Strömungsmaschinen die Eigenschaften haben, dass sie - ähnlich einer Flugzeugturbine - das verdichtete Medium nicht mit problematischen Stoffen, wie beispielsweise Öl, in Verbindung bringen. Stattdessen wird der Wasserdampf lediglich durch die Turbine bzw. den Turboverdichter verdichtet, jedoch nicht mit Öl oder einem sonstigen die Reinheit beeinträchtigenden Medium in Verbindung gebracht und damit verunreinigt.

Das durch den Ablauf abgeführte destillierte Wasser kann somit - wenn keine sonstigen Vorschriften im Wege stehen - ohne Weiteres dem Grundwasser wieder zugeführt werden. Alternativ kann es jedoch auch z.B. im Garten oder in einer Freifläche versickert werden, oder es kann über den Kanal, sofern dies Vorschriften gebieten - einer Kläranlage zugeführt werden.

Die Kombination von Wasser als Arbeitsmittel mit dem um das 2-fache besseren nutzbaren Enthalpie-Differenz-Verhältnis im Vergleich zu R134a und aufgrund der damit reduzierten Anforderungen an die Geschlossenheit des Systems, und aufgrund des Einsatzes der Strömungsmaschine, durch den effizient und ohne Reinheitsbeeinträchtigungen die erforderlichen Verdichtungsfaktoren erreicht werden, wird ein effizienter und umweltneutraler Wärmepumpenprozess geschaffen.

Fig. 8B zeigt eine Tabelle zur Illustration verschiedener Drücke und den diesen Drücken zugeordneten Verdampfungstemperaturen, woraus sich ergibt, dass insbesondere für Wasser als Arbeitsmedium recht niedrige Drücke im Verdampfer zu wählen sind.

Die DE 4431887 A1 offenbart eine Wärmepumpenanlage mit einem leichtgewichtigen, großvolumigen Hochleistungs-Zentrifugalkompressor. Ein Dampf, der einen Kompressor einer zweiten Stufe verlässt, besitzt eine Sättigungstemperatur, die die Umgebungstemperatur oder diejenige eines verfügbaren Kühlwassers übersteigt, wodurch eine Wärmeabfuhr ermöglicht wird. Der komprimierte Dampf wird von dem Kompressor der zweiten Stufe in die Kondensatoreinheit überführt, die aus einer Schüttschicht besteht, die innerhalb einer Kühlwassersprüheinrichtung an einer Oberseite, die durch eine Wasserzirkulationspumpe versorgt wird, vorgesehen ist. Der komprimierte Wasserdampf steigt in dem Kondensor durch die Schüttschicht an, wo sie in direktem Gegenstromkontakt mit dem nach unten strömenden Kühlwasser gelangt. Der Dampf kondensiert und die latente Wärme der Kondensation, die durch das Kühlwasser absorbiert wird, wird an die Atmosphäre über das Kondensat und das Kühlwasser ausgestoßen, die zusammen aus dem System entfernt werden. Der Kondensor wird kontinuierlich mit nicht kondensierbaren Gasen mittels einer Vakuumpumpe über eine Rohrleitung gespült.

Die WO 2014072239 A1 offenbart einen Verflüssiger mit einer Kondensationszone zum Kondensieren von zu kondensierendem Dampf in einer Arbeitsflüssigkeit. Die Kondensationszone ist als Volumenzone ausgebildet und hat eine seitliche Begrenzung zwischen dem oberen Ende der Kondensationszone und dem unteren Ende. Ferner umfasst der Verflüssiger eine Dampfeinleitungszone, die sich entlang des seitlichen Endes der Kondensationszone erstreckt und ausgebildet ist, um zu kondensierenden Dampf seitlich über die seitliche Begrenzung in die Kondensationszone zuzuführen. Damit wird, ohne das Volumen des Verflüssigers zu vergrößern, die tatsächliche Kondensation zu einer Volumenkondensation gemacht, weil der zu verflüssigende Dampf nicht nur frontal von einer Seite in ein Kondensationsvolumen bzw. in die Kondensationszone eingeleitet wird, sondern seitlich und vorzugsweise von allen Seiten. Damit wird nicht nur sichergestellt, dass das zur Verfügung gestellte Kondensationsvolumen bei gleichen äußeren Abmessungen im Vergleich zu einer direkten Gegenstromkondensation vergrößert wird, sondern dass gleichzeitig auch die Effizienz des Kondensators verbessert wird, weil der zu verflüssigende Dampf in der Kondensationszone eine Stromrichtung quer zu der Strömungsrichtung der Kondensationsflüssigkeit aufweist.

Insbesondere dann, wenn Wärmepumpen mit relativ niedrigen Drücken betrieben werden, also z.B. Drücken, die kleiner oder deutlich kleiner als der Atmosphärendruck sind, existiert die Notwendigkeit, die Wärmepumpe zu evakuieren, damit im Verdampfer ein so niedriger Druck geschaffen wird, dass das verwendete Arbeitsmittel, das z.B. Wasser sein kann, bei der zur Verfügung stehenden Temperatur zu verdampfen beginnt.

Dies bedeutet jedoch gleichzeitig, dass auch im Betrieb der Wärmepumpe dieser niedrige Druck beibehalten werden muss. Andererseits ist es insbesondere bei Konstruktionen mit vertretbaren Kosten potenziell möglich, dass Lecks in der Wärmepumpe existieren. Gleichzeitig können sich auch Fremdgase aus dem flüssigen oder gasförmigen Medium lösen, die im Kondensierer nicht mehr kondensieren und damit zu einem Druckanstieg in der Wärmepumpe führen. Es hat sich gezeigt, dass ein zunehmender Anteil an Fremdgas in der Wärmepumpe zu einem immer geringeren Effizienz führt.

Trotz der Tatsache, dass Fremdgase existieren, muss generell davon ausgegangen werden, dass im Gasraum hauptsächlich der erwünschte Arbeitsdampf vorhanden ist. Es tritt also eine Mischung zwischen Arbeitsdampf und Fremdgasen auf, die derart ist, dass überwiegend Arbeitsdampf enthalten ist und nur zu einem relativ kleinen Anteil Fremdgase.

Würde man laufend evakuieren, so würde dies dazu führen, dass zwar Fremdgase entfernt werden. Gleichzeitig wird jedoch auch laufend Arbeitsdampf aus der Wärmepumpe extrahiert. Insbesondere dann, wenn auf Kondensiererseite evakuiert werden würde, ist dieser extrahierte Arbeitsdampf bereits erwärmt. Eine Extraktion von verdichtetem bzw. erwärmtem Arbeitsdampf ist jedoch in zweierlei Hinsicht nachteilig. Zum einen wird Energie ungenutzt aus dem System entzogen und typischerweise in die Umgebung abgegeben. Zum anderen führt die laufende Erwärmung von Arbeitsdampf dazu, dass insbesondere in geschlossenen Systemen der Arbeitsflüssigkeitspegel abfällt. Es muss also Arbeitsflüssigkeit nachgefüllt werden. Darüber hinaus erfordert die Vakuumpumpe eine beträchtliche Menge an Energie, was insbesondere dahin gehend problematisch ist, dass dafür Energie aufgewendet wird, dass eigentlich in der Wärmepumpe gewünschter Arbeitsdampf extrahiert wird, da die Fremdgaskonzentration in der Wärmepumpe relativ niedrig ist, jedoch bereits bei niedrigen Konzentrationen zu Effizienzverlusten führt.

Die WO 2014/179032 A1 offenbart einen Kompressor mit einer mit einer Ansaugöffnung, einer Auslassöffnung und einem Motorraum. Ein Elektromotor hat einen Stator innerhalb des Motorraums und einen Rotor innerhalb des Stators. Der Rotor ist um eine Rotorachse drehbar gelagert. Ein oder mehrere Arbeitslaufräder sind mit dem Rotor gekoppelt, um durch den Rotor in mindestens einem ersten Zustand angetrieben zu werden, um Fluid durch die Ansaugöffnung anzusaugen und das Fluid aus der Abgabeöffnung abzugeben. Zwischen der Saugöffnung und dem einen oder den mehreren Laufrädern befindet sich eine Anordnung von Einlassleitschaufeln. Ein oder mehrere Lager tragen den Rotor und/oder das eine oder die mehreren Laufräder. Eine Spüleinheit hat eine Dampfeinlassleitung zum Aufnehmen eines Kühlmittelstroms und eine Rückführleitung zum Zurückführen eines von Verunreinigungen befreiten Kühlmittelstroms. Ein Versorgungsströmungsweg zum Zuführen von Kühlmittel zu den Lagern erstreckt sich von der Spüleinheit. Die Kühlung der Spüleinheit zum Kondensieren von Kühlmittel in der Spüleinheit umfasst eine eigene Wärmepumpe mit einer Verdampferspule in der Spüleinheit.

Die Aufgabe der vorliegenden Erfindung besteht darin, ein effizienteres Wärmepumpenkonzept zu schaffen.

Diese Aufgabe wird durch eine Wärmepumpe nach Patentanspruch 1, ein Verfahren zum Betreiben einer Wärmepumpe nach Patentanspruch 14 oder ein Verfahren zum Herstellen einer Wärmepumpe nach Patentanspruch 15 gelöst.

Die Wärmepumpe gemäß der vorliegenden Erfindung umfasst einen Kondensierer zum Kondensieren von verdichtetem bzw. ggf. erwärmtem Arbeitsdampf und eine Gasfalle, die durch eine Fremdgaszuführung mit dem Kondensierer gekoppelt ist. Insbesondere weist die Gasfalle ein Gehäuse mit einem Fremdgaszuführungseingang, einer Arbeitsflüssigkeitszuleitung in dem Gehäuse, einer Arbeitsflüssigkeitsableitung in dem Gehäuse und eine Pumpe auf, um Gas aus dem Gehäuse abzupumpen. Das Gehäuse, die Arbeitsflüssigkeitszuleitung und die Arbeitsflüssigkeitsableitung sind so ausgebildet und angeordnet, dass im Betrieb eine Arbeitsflüssigkeitsströmung von der Arbeitsflüssigkeitszuleitung zu der Arbeitsflüssigkeitsableitung in dem Gehäuse stattfindet. Ferner ist die Arbeitsflüssigkeitszuleitung so mit der Wärmepumpe gekoppelt, dass im Betrieb der Wärmepumpe Arbeitsflüssigkeit zugeleitet wird, die kälter ist als ein zu kondensierender Arbeitsdampf in dem Kondensierer.

Je nach Implementierung ist die Arbeitsflüssigkeitszuleitung mit der Wärmepumpe gekoppelt ist, um im Betrieb der Wärmepumpe Arbeitsflüssigkeit zu leiten, die kälter ist als eine Temperatur, die zu einem Sattdampfdruck eines Arbeitsdampfs gehört, der in dem Kondensierer zu kondensieren ist. So gehört zum Sattdampfdruck des Arbeitsdampfes immer eine Temperatur, die z. B. aus dem h-logp-Diagramm oder einem ähnlichen Diagramm zu entnehmen ist.

Damit werden Fremdgas und Arbeitsdampf, welche beide in einem bestimmten Verhältnis gemischt durch die Fremdgaszuführung in den Kondensierer eintreten, in direkten oder indirekten Kontakt mit der Arbeitsflüssigkeitsströmung gebracht, so dass sich eine Fremdgasanreicherung ergibt. Die Fremdgasanreicherung kommt dadurch zustande, dass der Arbeitsdampf durch einen direkten oder indirekten Kontakt mit der Arbeitsflüssigkeitsströmung, die relativ kalt ist, kondensiert. Dagegen können die Fremdgase nicht kondensieren, so dass sich in dem Gehäuse der Gasfalle nach und nach Fremdgas anreichert. Das Gehäuse stellt für das Fremdgas somit eine Gasfalle dar, während der Arbeitsdampf kondensieren kann und im System verbleibt.

Durch die Pumpe zum Abpumpen von Gas aus dem Gehäuse wird das angereicherte Fremdgas entfernt. Im Unterschied zu dem Verhältnis zwischen Fremdgas und Arbeitsdampf im Kondensierer, wo die Konzentration des Fremdgases noch sehr klein ist, führt das Abpumpen von Gas aus dem Gehäuse der Gasfalle nicht zu einer besonders starken Extraktion von Arbeitsdampf aus dem System, weil der überwiegende Teil des Arbeitsdampfes in der Arbeitsflüssigkeitsströmung entweder durch direkten oder indirekten Kontakt kondensiert ist, und damit durch die Pumpe nicht mehr abgepumpt werden kann.

Damit werden mehrere Vorteile erhalten. Ein Vorteil besteht darin, dass Arbeitsdampf seine Energie abgibt und dass diese Energie somit im System verbleibt und nicht an die Umgebung verloren wird. Ein weiterer Vorteil besteht darin, dass die Menge an extrahierter Arbeitsflüssigkeit stark reduziert ist. Damit muss Arbeitsflüssigkeit kaum oder gar nicht mehr nachgefüllt werden, was den Aufwand für die korrekte Beibehaltung des Arbeitsflüssigkeitspegels reduziert und gleichzeitig auch den Aufwand dafür reduziert, dass ggf. dennoch extrahierte Arbeitsflüssigkeit aufgefangen und weggebracht werden muss. Ein weiterer Vorteil besteht darin, dass die Pumpe zum Abpumpen von Gas aus dem Gehäuse weniger abpumpen muss, weil relativ konzentriertes Fremdgas abgeführt wird. Der Energieverbrauch der Pumpe ist daher gering und die Pumpe muss nicht so stark ausgelegt werden. Eine weniger stark ausgelegte Pumpe führt zwar dazu, dass bei einem erstmaligen Evakuieren des Systems etwas mehr Zeit vergeht. Diese Zeit ist jedoch für eine normale Anwendung nicht kritisch, weil normalerweise nur Servicetechniker eine erste Evakuierung bei der Inbetriebnahme oder nach einer Wartung durchführen werden. Solche Servicetechniker können ggf., wenn es doch schneller gehen soll, eine externe mitgebrachte Pumpe anschließen, die jedoch nicht mit dem System fest gekoppelt sein muss.

Bei einem weiteren Aspekt der vorliegenden Erfindung wird bereits ein Fremdgassammelraum innerhalb des Kondensierers bereitgestellt. Eine Wärmepumpe gemäß diesem weiteren Aspekt umfasst einen Kondensierer zum Kondensieren von verdichtetem bzw. ggf. erwärmtem Arbeitsdampf, einen Fremdgassammelraum, der in dem Kondensierer angebracht ist, wobei dieser Fremdgassammelraum eine Kondensationsoberfläche, die im Betrieb der Wärmepumpe kälter als eine Temperatur des zu kondensierenden Arbeitsdampfes ist, und eine Trennwand aufweist, die zwischen der Kondensationsoberfläche und einer Kondensationszone in dem Kondensierer angeordnet ist. Ferner ist eine Fremdgasabführungseinrichtung vorgesehen, welche mit dem Fremdgassammelraum gekoppelt ist, um Fremdgas aus dem Fremdgassammelraum abzuführen.

Je nach Implementierung ist die Kondensationsoberfläche kälter als eine Temperatur, die zu einem Sattdampfdruck eines Arbeitsdampfs gehört, der in dem Kondensierer zu kondensieren ist. So gehört zum Sattdampfdruck des Arbeitsdampfes, wie weiter oben ausgeführt, immer eine Temperatur, die z.B. aus dem h-logp-Diagramm oder einem ähnlichen Diagramm zu entnehmen ist.

In einer Implementierung kann das nunmehr im Kondensierer angereicherte Fremdgas direkt nach außen abgeführt werden. Alternativ kann jedoch die Fremdgasabführungseinrichtung mit der Gasfalle gemäß dem ersten Aspekt der vorliegenden Erfindung gekoppelt sein, so dass bereits ein Gas, in dem das Fremdgas angereichert ist, in die Gasfalle geführt wird, um die Effizienz der ganzen Vorrichtung noch weiter zu erhöhen. Allerdings führt eine direkte Abführung von bereits angereichertem Fremdgas aus dem Fremdgassammelraum im Kondensierer bereits zu einer gesteigerten Effizienz im Vergleich zu einer Vorgehensweise, bei der einfach im Kondensierer vorhandenes Gas abgepumpt werden würde. Insbesondere stellt die Kondensationsoberfläche im Fremdgassammelraum sicher, dass Arbeitsdampf an der Kondensationsoberfläche kondensiert und sich damit Fremdgas anreichert. Damit diese Fremdgasanreicherung in einem doch relativ turbulenten Kondensierer stattfinden kann, ist die Trennwand vorgesehen, die zwischen der (kalten) Kondensationsoberfläche und der Kondensationszone in dem Kondensierer angeordnet ist. Damit wird die Kondensationszone von dem Fremdgassammelraum abgetrennt, so dass eine gewissermaßen beruhigte Zone geschaffen wird, die weniger turbulent als die Kondensationszone ist. In dieser beruhigten Zone kann noch vorhandener Arbeitsdampf an der relativ kalten Kondensationsoberfläche kondensieren, und das Fremdgas sammelt sich im Fremdgassammelraum zwischen der Kondensationsoberfläche und der Trennwand an. Die Trennwand arbeitet somit in zweierlei Hinsicht. Zum einen schafft sie eine beruhigte Zone und zum anderen wirkt sich als Isolierung, derart, dass an der kalten Oberfläche, also der Kondensationsoberfläche keine unerwünschten Wärmeverluste stattfinden.

Das angesammelte Fremdgas wird dann durch die Fremdgasabführungseinrichtung, die mit dem Fremdgassammelraum gekoppelt ist, abgeführt, und zwar, je nach Implementierung, direkt nach außen oder in die Gasfalle gemäß dem ersten Aspekt der vorliegenden Erfindung.

Die Aspekte der Gasfalle einerseits und des Fremdgassammelraums im Kondensierer andererseits können also gemeinsam verwendet werden. Jedoch können beide Aspekte auch separat voneinander eingesetzt werden, um bereits eine erhebliche Effizienzverbesserung aufgrund der oben beschriebenen Vorteile zu erreichen.

Bevorzugte Ausführungsbeispiele der vorliegenden Erfindung werden nachfolgend Bezug nehmend auf die beiliegenden Zeichnungen detailliert erläutert. Es zeigen:
- Fig. 1A: eine schematische Ansicht einer Wärmepumpe mit einer verschränkten Verdampfer/Kondensierer-Anordnung;
- Fig. 1B: eine Wärmepumpe mit einer Gasfalle gemäß einem Ausführungsbeispiel der vorliegenden Erfindung bezüglich des ersten Aspekts;
- Fig. 2A: eine Darstellung des Gehäuses der Gasfalle gemäß einer Implementierung mit indirektem Kontakt;
- Fig. 2B: eine alternative Implementierung der Gasfalle mit direktem Kontakt und schräger Anordnung;
- Fig. 3: eine alternative Implementierung der Gasfalle mit maximal turbulenter senkrechter Anordnung und direktem Kontakt;
- Fig. 4: eine schematische Darstellung eines Systems mit zwei Wärmepumpenstufen (Dosen) in Verbindung mit einer Gasfalle;
- Fig. 5: eine Schnittdarstellung einer Wärmepumpe mit einem Verdampferboden und einem Kondensatorboden gemäß dem Ausführungsbeispiel von Fig. 1;
- Fig. 6: eine perspektivische Darstellung eines Verflüssigers, wie er in der WO 2014072239 A1 gezeigt ist;
- Fig. 7: eine Darstellung der Flüssigkeitsverteilerplatte einerseits und der Dampfeinlasszone mit Dampfeinlassspalt andererseits aus der WO 2014072239 A1;
- Fig. 8a: eine schematische Darstellung einer bekannten Wärmepumpe zum Verdampfen von Wasser;
- Fig. 8b: eine Tabelle zur Veranschaulichung von Drücken und Verdampfungstemperaturen von Wasser als Arbeitsflüssigkeit;
- Fig. 9: eine schematische Darstellung einer Wärmepumpe mit einem Fremdgassammelraum im Kondensierer gemäß einem Ausführungsbeispiel bezüglich des zweiten Aspekts der vorliegenden Erfindung;
- Fig. 10: einen Querschnitt durch eine Wärmepumpe mit verschränkter Verdampfer/Kondensierer-Anordnung;
- Fig. 11: eine Fig. 10 ähnliche Darstellung zur Erläuterung des Funktionsprinzips;
- Fig. 12: eine Querschnittsdarstellung einer Wärmepumpe mit verschränkter Verdampfer/Kondensierer-Anordnung und einer kegelstumpfförmigen Trennwand.

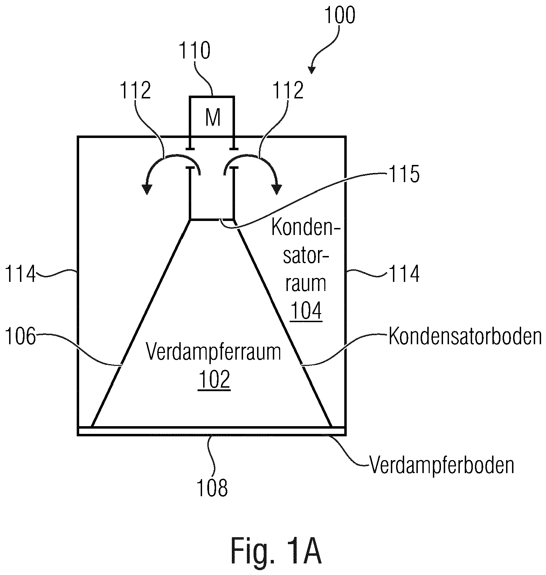

Fig. 1A zeigt eine Wärmepumpe 100 mit einem Verdampfer zum Verdampfen von Arbeitsflüssigkeit in einem Verdampferraum 102. Die Wärmepumpe umfasst ferner einen Kondensator zum Verflüssigen von verdampfter Arbeitsflüssigkeit in einem Kondensatorraum 104, der von einem Kondensatorboden 106 begrenzt ist. Wie es in Fig. 1A gezeigt ist, die als Schnittdarstellung oder als Seitenansicht angesehen werden kann, ist der Verdampferraum 102 zumindest teilweise von dem Kondensatorraum 104 umgeben. Ferner ist der Verdampferraum 102 durch den Kondensatorboden 106 von dem Kondensatorraum 104 getrennt. Darüber hinaus ist der Kondensatorboden mit einem Verdampferboden 108 verbunden, um den Verdampferraum 102 zu definieren. In einer Implementierung ist oberhalb am Verdampferraum 102 oder an anderer Stelle ein Kompressor 110 vorgesehen, der in Fig. 1A nicht näher ausgeführt ist, der jedoch prinzipiell ausgebildet ist, um verdampfte Arbeitsflüssigkeit zu komprimieren und als komprimierten Dampf 112 in den Kondensatorraum 104 zu leiten. Der Kondensatorraum ist ferner nach außen hin durch eine Kondensatorwand 114 begrenzt. Die Kondensatorwand 114 ist ebenfalls wie der Kondensatorboden 106 an dem Verdampferboden 108 befestigt. Insbesondere ist die Dimensionierung des Kondensatorbodens 106 in dem Bereich, der die Schnittstelle zum Verdampferboden 108 bildet, so, dass der Kondensatorboden bei dem in Fig. 1A gezeigten Ausführungsbeispiel vollständig von der Kondensatorraumwand 114 umgeben ist. Dies bedeutet, dass sich der Kondensatorraum, wie es in Fig. 1A gezeigt ist, bis zum Verdampferboden erstreckt, und dass sich der Verdampferraum gleichzeitig sehr weit nach oben, typischerweise nahezu durch fast den gesamten Kondensatorraum 104 erstreckt.

Diese "verschränkte" oder ineinandergreifende Anordnung von Kondensator und Verdampfer, die sich dadurch auszeichnet, dass der Kondensatorboden mit dem Verdampferboden verbunden ist, liefert eine besonders hohe Wärmepumpeneffizienz und erlaubt daher eine besonders kompakte Bauform einer Wärmepumpe. Größenordnungsmäßig ist die Dimensionierung der Wärmepumpe z.B. in einer zylindrischen Form so, dass die Kondensatorwand 114 einen Zylinder mit einem Durchmesser zwischen 30 und 90 cm und einer Höhe zwischen 40 und 100 cm darstellt. Die Dimensionierung kann jedoch je nach erforderliche Leistungsklasse der Wärmepumpe gewählt werden, findet jedoch vorzugsweise in den genannten Dimensionen statt. Damit wird eine sehr kompakte Bauform erreicht, die zudem einfach und günstig herstellbar ist, weil die Anzahl der Schnittstellen, insbesondere für den fast unter Vakuum stehenden Verdampferraum ohne weiteres reduziert werden kann, wenn der Verdampferboden gemäß bevorzugten Ausführungsbeispielen der vorliegenden Erfindung dahin gehend ausgeführt wird, dass er sämtliche Flüssigkeits-Zu- und Ableitungen umfasst und damit keine Flüssigkeits-Zu- und Ableitungen von der Seite oder von oben nötig sind.

Ferner sei darauf hingewiesen, dass die Betriebsrichtung der Wärmepumpe so ist, wie sie in Fig. 1A gezeigt ist. Dies bedeutet, dass der Verdampferboden im Betrieb den unteren Abschnitt der Wärmepumpe definiert, jedoch abgesehen von Verbindungsleitungen mit anderen Wärmepumpen oder zu entsprechenden Pumpeneinheiten. Dies bedeutet, dass im Betrieb der im Verdampferraum erzeugte Dampf nach oben steigt und durch den Motor umgelenkt wird und von oben nach unten in den Kondensatorraum eingespeist wird, und dass die Kondensatorflüssigkeit von unten nach oben geführt wird, und dann von oben in den Kondensatorraum zugeführt wird und dann im Kondensatorraum von oben nach unten fließt, wie beispielsweise durch einzelne Tröpfchen oder durch kleine Flüssigkeitsströme, um mit dem vorzugsweise quer zugeführten komprimierten Dampf zu Zwecken einer Kondensation zu reagieren.

Diese ineinander "verschränkte" Anordnung, dahin gehend, dass der Verdampfer fast vollständig oder sogar vollständig innerhalb des Kondensators angeordnet ist, ermöglicht eine sehr effiziente Ausführung der Wärmepumpe mit optimaler Platzausnutzung. Nachdem der Kondensatorraum sich bis zum Verdampferboden hin erstreckt, ist der Kondensatorraum innerhalb der gesamten "Höhe" der Wärmepumpe oder zumindest innerhalb eines wesentlichen Abschnitts der Wärmepumpe ausgebildet. Gleichzeitig ist jedoch auch der Verdampferraum so groß als möglich, weil er sich ebenfalls nahezu fast über die gesamte Höhe der Wärmepumpe erstreckt. Durch die ineinander verschränkte Anordnung im Gegensatz zu einer Anordnung, bei der der Verdampfer unterhalb des Kondensators angeordnet ist, wird der Raum optimal genutzt. Dies ermöglicht zum einen einen besonders effizienten Betrieb der Wärmepumpe und zum anderen einen besonders platzsparenden und kompakten Aufbau, weil sowohl der Verdampfer als auch der Verflüssiger sich über die gesamte Höhe erstrecken. Damit geht zwar die "Dicke" des Verdampferraums und auch des Verflüssigerraums zurück. Es wurde jedoch herausgefunden, dass die Reduktion der "Dicke" des Verdampferraums, der sich innerhalb des Kondensators verjüngt, unproblematisch ist, weil die Hauptverdampfung im unteren Bereich stattfindet, wo der Verdampferraum nahezu das gesamte Volumen, das zur Verfügung steht, ausfüllt. Andererseits ist die Reduktion der Dicke des Kondensatorraums besonders im unteren Bereich, also dort wo der Verdampferraum nahezu den gesamten zur Verfügung stehenden Bereich ausfüllt, unkritisch, weil die Hauptkondensation oben stattfindet, also dort, wo der Verdampferraum bereits relativ dünn ist und damit ausreichend Platz für den Kondensatorraum zurücklässt. Die ineinander verschränkte Anordnung ist somit optimal dahin gehend, dass jedem Funktionsraum dort das große Volumen gegeben wird, wo dieser Funktionsraum das große Volumen auch benötigt. Der Verdampferraum hat unten das große Volumen, während der Kondensatorraum oben das große Volumen hat. Dennoch trägt auch das entsprechende kleine Volumen, das für den jeweiligen Funktionsraum dort verbleibt, wo der andere Funktionsraum das große Volumen hat, zu einer Effizienzsteigerung bei im Vergleich zu einer Wärmepumpe, bei der die beiden Funktionselemente übereinander angeordnet sind, wie es z.B. in der WO 2014072239 A1 der Fall ist.

Bei bevorzugten Ausführungsbeispielen ist der Kompressor derart an der Oberseite des Kondensatorraums angeordnet, dass der komprimierte Dampf durch den Kompressor einerseits umgelenkt und gleichzeitig in einen Randspalt des Kondensatorraums eingespeist wird. Damit wird eine Kondensation mit besonders hoher Effizienz erreicht, weil eine Querstromrichtung des Dampfes zu einer herabfließenden Kondensationsflüssigkeit erreicht wird. Diese Kondensation mit Querströmung ist besonders im oberen Bereich, wo der Verdampferraum groß ist, wirksam und benötigt im unteren Bereich, wo der Kondensatorraum zugunsten des Verdampferraums klein ist, keinen besonders großen Bereich mehr, um dennoch eine Kondensation von bis zu diesem Bereich vorgedrungenen Dampfpartikeln zu erlauben.

Ein Verdampferboden, der mit dem Kondensatorboden verbunden ist, ist vorzugsweise so ausgebildet, dass er den Kondensator-Zu- und Ablauf und den Verdampfer-Zu- und Ablauf in sich aufnimmt, wobei zusätzlich noch bestimmte Durchführungen für Sensoren in den Verdampfer bzw. in den Kondensator vorhanden sein können. Damit wird erreicht, dass keine Durchführungen von Leitungen für den Kondensator-Zu- und Ablauf durch den nahezu unter Vakuum stehenden Verdampfer nötig sind. Dadurch wird die die gesamte Wärmepumpe weniger fehleranfällig, weil jede Durchführung durch den Verdampfer eine Möglichkeit für ein Leck darstellen würde. Dazu ist der Kondensatorboden an den Stellen, an denen die Kondensator-Zu- und Abläufe sind, mit einer jeweiligen Aussparung versehen, dahin gehend, dass in dem Verdampferraum, der durch den Kondensatorboden definiert wird, keine Kondensator-Zu/Abführungen verlaufen.

Der Kondensatorraum wird durch eine Kondensatorwand begrenzt, die ebenfalls an dem Verdampferboden anbringbar ist. Der Verdampferboden hat somit eine Schnittstelle sowohl für die Kondensatorwand als auch den Kondensatorboden und hat zusätzlich sämtliche Flüssigkeits-Zuführungen sowohl für den Verdampfer als auch den Verflüssiger.

Bei bestimmten Ausführungen ist der Verdampferboden ausgebildet, um Anschlussstutzen für die einzelnen Zuführungen zu haben, die einen Querschnitt haben, der sich von einem Querschnitt der Öffnung auf der anderen Seite des Verdampferbodens unterscheidet. Die Form der einzelnen Anschlussstutzen ist dann so ausgebildet, dass sich die Form bzw. Querschnittsform über der Länge des Anschlussstutzens verändert, jedoch der Rohrdurchmesser, der für die Strömungsgeschwindigkeit eine Rolle spielt, in einer Toleranz von ± 10 % nahezu gleich ist. Damit wird verhindert, dass durch den Anschlussstutzen fließendes Wasser zu kavitieren beginnt. Damit wird aufgrund der guten durch die Formung der Anschlussstutzen erhaltenen Strömungsverhältnisse sichergestellt, dass die entsprechenden Rohre/Leitungen so kurz wie möglich gemacht werden können, was wiederum zu einer kompakten Bauform der gesamten Wärmepumpe beiträgt.

Bei einer speziellen Implementierung des Verdampferbodens wird der Kondensatorzulauf nahezu in Form einer "Brille" in einen zwei- oder mehrteiligen Strom aufgeteilt. Damit ist es möglich, die Kondensatorflüssigkeit im Kondensator an seinem oberen Abschnitt an zwei oder mehreren Punkten gleichzeitig einzuspeisen. Damit wird eine starke und gleichzeitig besonders gleichmäßige Kondensatorströmung von oben nach unten erreicht, die es ermöglicht, dass eine hocheffiziente Kondensation des ebenfalls von oben in den Kondensator eingeführten Dampfes erreicht wird.

Eine weitere kleiner dimensionierte Zuführung im Verdampferboden für Kondensatorwasser kann ebenfalls vorgesehen sein, um damit einen Schlauch zu verbinden, der dem Kompressormotor der Wärmepumpe Kühlflüssigkeit zuführt, wobei zur Kühlung nicht die kalte, dem Verdampfer zugeführte Flüssigkeit verwendet wird, sondern die wärmere, dem Kondensator zugeführte Flüssigkeit, die jedoch immer noch bei typischen Betriebssituationen kühl genug ist, um den Motor der Wärmepumpe zu kühlen.

Der Verdampferboden zeichnet sich dadurch aus, dass er eine Kombinationsfunktionalität hat. Zum einen stellt er sicher, dass keine Kondensatorzuleitungen durch den unter sehr geringem Druck stehenden Verdampfer hindurchgeführt werden müssen. Andererseits stellt er eine Schnittstelle nach außen dar, die vorzugsweise eine kreisrunde Form hat, da bei einer kreisrunden Form möglichst viel Verdampferfläche verbleibt. Alle Zu- und Ableitungen führen durch den einen Verdampferboden und laufen von dort in entweder den Verdampferraum oder den Kondensatorraum. Insbesondere eine Herstellung des Verdampferbodens aus Kunststoffspritzguss ist besonders vorteilhaft, weil die vorteilhaften relativ komplizierten Formgebungen der Zu/Ablaufstutzen in Kunststoffspritzguss ohne weiteres und preisgünstig ausgeführt werden können. Andererseits ist es aufgrund der Ausführung des Verdampferbodens als gut zugängliches Werkstück ohne weiteres möglich, den Verdampferboden mit ausreichender struktureller Stabilität herzustellen, damit er insbesondere dem niedrigen Verdampferdruck ohne weiteres standhalten kann.

In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt werden.

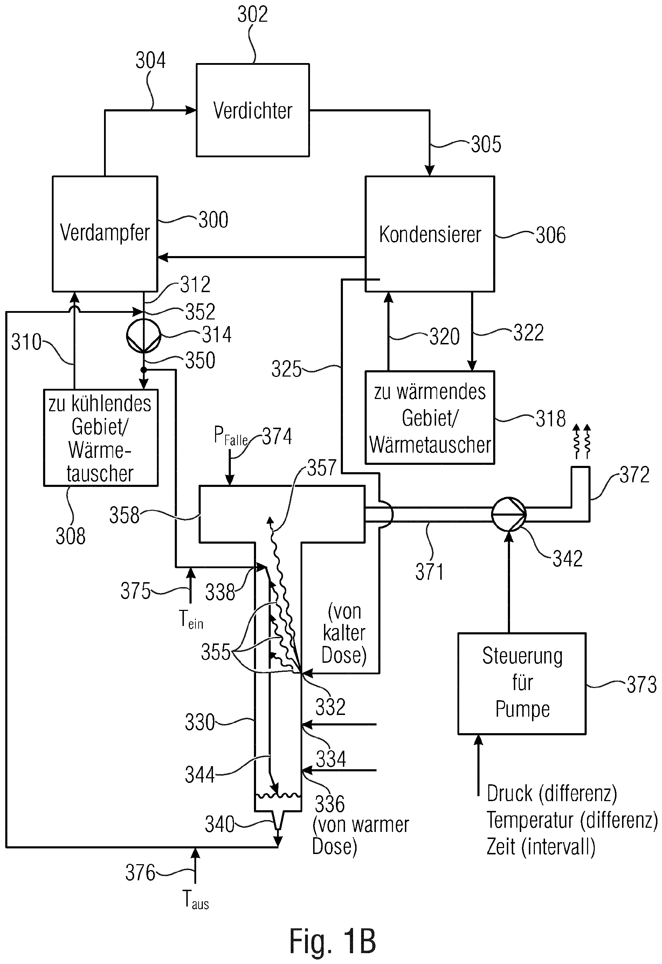

Fig. 1B zeigt eine Wärmepumpe mit einer Gasfalle gemäß dem ersten Aspekt der vorliegenden Erfindung in einem bevorzugten Ausführungsbeispiel, das allgemein eine verschränkte Anordnung aus Verdampfer und Kondensierer oder aber jede andere Anordnung zwischen dem Verdampfer und dem Kondensierer haben kann.

Insbesondere umfasst die Wärmepumpe allgemein einen Verdampfer 300, der mit einem Verdichter 302 gekoppelt ist, um über eine Dampfleitung 304 kalten Arbeitsdampf anzusaugen, zu verdichten und damit zu erwärmen. Der erwärmte und verdichtete Arbeitsdampf wird an einen Kondensierer 306 abgegeben. Der Verdampfer 300 ist mit einem zu kühlenden Gebiet 308 gekoppelt, und zwar über eine Verdampferzulaufleitung 310 und eine Verdampferablaufleitung 312, in der typischerweise eine Pumpe 314 vorgesehen ist. Darüber hinaus ist ein zu wärmendes Gebiet 318 vorgesehen, das mit dem Kondensierer 306 gekoppelt ist, und zwar über eine Kondensiererzulaufleitung 320 und eine Kondensiererablaufleitung 322. Der Kondensierer 306 ist ausgebildet, um erwärmten Arbeitsdampf in dem Kondensiererzulaufkanal 305 zu kondensieren.

Ferner ist eine Gasfalle vorgesehen, die durch eine Fremdgaszuführung 325 mit dem Kondensierer 306 gekoppelt ist. Die Gasfalle umfasst insbesondere ein Gehäuse 330 mit einem Fremdgaszuführungseingang 332 und ggf. weiteren Fremdgaszuführungseingängen 334, 336. Ferner umfasst das Gehäuse 330 eine Arbeitsflüssigkeitszuleitung 338 sowie eine Arbeitsflüssigkeitsableitung 340. Die Wärmepumpe umfasst ferner eine Pumpe 342 zum Abpumpen von Gas aus dem Gehäuse 330. Insbesondere sind die Arbeitsflüssigkeitszuleitung 338, die Arbeitsflüssigkeitsableitung 340 und das Gehäuse so ausgebildet und angeordnet, dass im Betrieb eine Arbeitsflüssigkeitsströmung 344 von der Arbeitsflüssigkeitszuleitung 338 zu der Arbeitsflüssigkeitsableitung 340 in dem Gehäuse 330 stattfindet.

Die Arbeitsflüssigkeitszuleitung 338 ist ferner so mit der Wärmepumpe gekoppelt, dass im Betrieb der Wärmepumpe Arbeitsflüssigkeit zugeleitet wird, die kälter ist als ein zu kondensierender Arbeitsdampf im Kondensierer und die vorzugsweise sogar kälter als die Arbeitsflüssigkeit ist, die in den Kondensierer eintritt oder den Kondensierer verlässt. Hierzu wird vorzugsweise Arbeitsflüssigkeit aus der Verdampferablaufleitung bei einem Abzweigungspunkt 350 entnommen, da diese Arbeitsflüssigkeit die kälteste Arbeitsflüssigkeit im System ist. Der Abzweigpunkt 350 befindet sich nach der Pumpe 314 (in Flussrichtung), so dass für die Gasfalle keine eigene Pumpe nötig ist. Ferner wird es bevorzugt, den Rücklauf von der Gasfalle, also die Arbeitsflüssigkeitsableitung 340 mit einem Verzweigungspunkt 352 der Ablaufleitung zu koppeln, der vor der Pumpe 314 angeordnet ist.

Je nach Implementierung stellt der Arbeitsflüssigkeitsstrom durch die Gasfalle, also die Arbeitsflüssigkeitsströmung ein Volumen dar, das kleiner als 1 % des Hauptstroms, der durch die Pumpe 314 bewältigt wird, ist und vorzugsweise sogar in der Größenordnung von 0,5 bis 2 %o des Hauptstroms ist, der von dem Verdampfer über den Verdampferauslass 312 in das zu kühlende Gebiet 308 bzw. einen Wärmetauscher, an dem das zu kühlende Gebiet anschließbar ist, fließt.

Obgleich es in Fig. 1B dargestellt ist, dass die Arbeitsflüssigkeitsströmung aus einer Flüssigkeit im Wärmepumpensystem stammt, ist das nicht bei allen Ausführungsbeispielen so. Alternativ oder zusätzlich kann die Strömung auch durch einen externen Kreislauf bereitgestellt werden, also eine externe Kühlflüssigkeit. Diese kann durch die Gasfalle durchströmen und abgeführt werden, was bei Wasser ohnehin kein Problem ist. Wenn aber ein Kreislauf eingesetzt wird, läuft die Flüssigkeit am Ausgang der Gasfalle in einen Kühlbereich, wo die Flüssigkeit gekühlt wird. Hier kann eine Kühlung beispielsweise durch ein Peltierelement eingesetzt werden, so dass die in die Gasfalle eintretende Flüssigkeit kälter ist als die aus der Gasfalle austretende Flüssigkeit.

Wie es in Fig. 1B dargestellt ist, gelangt eine Mischung aus Arbeitsdampf und Fremdgasen von dem Kondensierer 306 über die Fremdgaszuführung 325 in das Gehäuse 330 der Gasfalle. Dort findet eine Kondensation des Arbeitsdampfes in dem Gasgemisch in der kalten Arbeitsflüssigkeit statt, wie es bei 355 angedeutet ist. Gleichzeitig kann sich jedoch Fremdgas nicht durch Kondensation entfernen, sondern das Fremdgas sammelt sich in der Gasfalle an, wie es bei 357 dargestellt ist. Um Raum für das angesammelte Fremdgas zu schaffen, umfasst das Gehäuse einen Ansammlungsraum 358, der beispielsweise oben angeordnet ist.

Aufgrund der Druckunterschiede zwischen dem Druck im Kondensierer 306 und der Gasfalle, die aufgrund der niedrigen Temperatur der Arbeitsflüssigkeit einen Druck in der Größenordnung des Verdampfers hat, findet automatisch eine Strömung vom Kondensierer 306 durch die Fremdgaszuführung 325 in das Gehäuse 330 der Gasfalle statt. Der Wasserdampf in dem Gemisch aus Fremdgas und Wasserdampf, der bei der Fremdgaszuführung 332, 334, 336 in das Gehäuse eintritt, hat die Tendenz, zu der kältesten Stelle hin zu strömen. Die kälteste Stelle ist dort, wo die Arbeitsflüssigkeit in das Gehäuse eintritt, also beim Arbeitsflüssigkeitseingang bzw. der Arbeitsflüssigkeitszuleitung 338. Es findet also in dem Gehäuse 330 eine Wasserdampfströmung von unten nach oben statt. Diese Wasserdampfströmung reißt die Fremdgasatome mit, die sich dann, wie es bei 357 angedeutet ist, oben in der Gasfalle ansammeln, weil sie nicht mit der Arbeitsflüssigkeit kondensieren können. Die Gasfalle führt also dazu, dass eine gewissermaßen automatische Strömung vom Kondensierer in das Gehäuse stattfindet, ohne dass hierzu eine Pumpe benötigt wird, und dass dann in der Gasfalle das Fremdgas von unten nach oben strömt und sich im oberen Bereich des Gehäuses 330 ansammelt und von dort durch die Pumpe 342 abgepumpt werden kann.

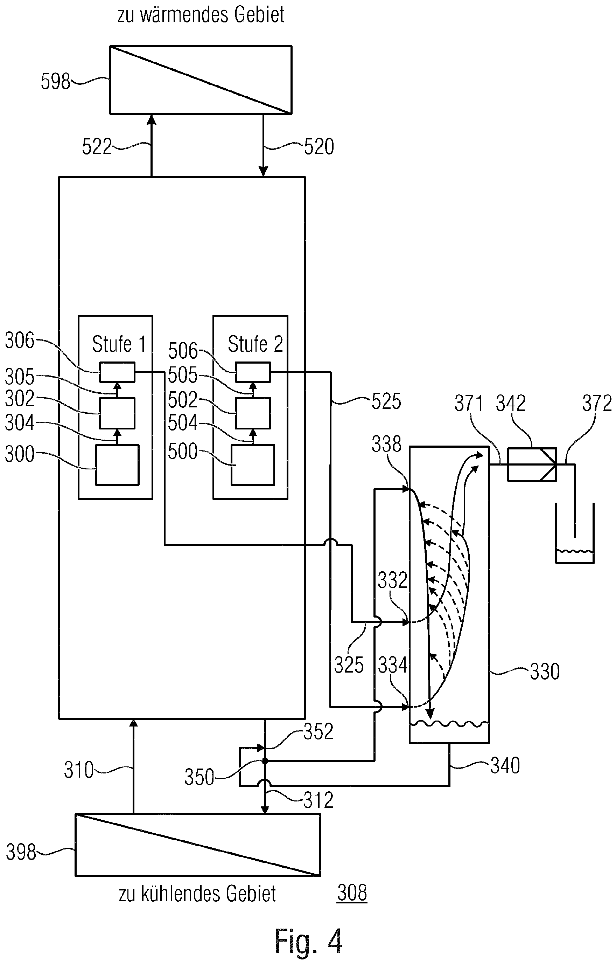

Wie es in Fig. 1B gezeigt ist, wird es bevorzugt, die Arbeitsflüssigkeitszuleitung 338 mit einem Pumpenausgang der Pumpe 314, also beim Verzweigungspunkt 350 zu koppeln. Je nach Implementierung kann jedoch eine beliebige andere, relativ kühle Flüssigkeit genommen werden, nämlich beispielsweise am Rücklauf des Verdampfers, also in der Leitung 310, in der das Temperaturniveau immer noch niedriger ist als im Kondensiererrücklauf 320 beispielsweise. Die kälteste Flüssigkeit im System bringt jedoch die größte Effizienz für die Gasfalle. Die Anordnung des Arbeitsflüssigkeitszulaufs 338, der mit dem Verzweigungspunkt 350 nach der Pumpe 314 gekoppelt ist, führt dazu, dass für die Arbeitsflüssigkeitszuleitung in die Gasfalle keine eigene Pumpe benötigt wird. Wird jedoch eine Pumpe vorgesehen, die allein oder als Zusatzfunktionalität die Gasfalle "bedient", so kann die Arbeitsflüssigkeitszuleitung 338 auch mit einer anderen Stelle im System gekoppelt werden, um einen bestimmten Strom an Arbeitsflüssigkeit in die Gasfalle zu leiten. So könnte die Arbeitsflüssigkeit auch sogar nach einem Wärmetauscher, wie er z.B. Bezug nehmend auf Fig. 4 dargestellt ist, abgezweigt werden, also gewissermaßen auf der "Kundenseite". Diese Vorgehensweise wird jedoch im Hinblick darauf, dass das System so wenig Kundenbeeinflussung als möglich haben sollte, nicht bevorzugt, ist aber grundsätzlich möglich.

Wie es in Fig. 1B gezeigt ist, ist die Pumpe 342 ausgebildet, um Gas aus dem Gehäuse 330 abzupumpen. Zu diesem Zweck ist die Pumpe 342 über eine Absaugleitung 371 mit dem Sammelraum 358 gekoppelt. Ausgangsseitig hat die Pumpe eine Ausstoßleitung 372, die ausgebildet ist, um das abgesaugte Gemisch aus angereichertem Fremdgas und restlichem Wasserdampf auszugeben. Je nach Implementierung kann die Leitung 372 einfach zur Umgebung offen sein oder in einen Behälter führen, wo der restlich verbleibende Wasserdampf kondensieren kann, um schließlich entsorgt oder in das System wieder eingeführt zu werden.

Die Pumpe 342 wird über eine Steuerung 373 angesteuert. Die Steuerung für die Pumpe kann aufgrund einer Druckdifferenz oder eines absoluten Drucks, aufgrund einer Temperaturdifferenz oder einer absoluten Temperatur oder aufgrund einer absoluten Zeitsteuerung oder einer Zeitintervallsteuerung stattfinden. Eine mögliche Steuerung ist beispielsweise über einen in der Gasfalle herrschenden Druck P_{Falle} 374. Eine alternative Steuerung findet über die Einlauftemperatur Tₑᵢₙ 375 an der Arbeitsflüssigkeitszuleitung 338 oder über eine Auslauftemperatur Tₐᵤₛ 376 statt. Insbesondere ist die Auslauftemperatur Tₐᵤₛ 376 an der Arbeitsflüssigkeitsableitung 340 ein Maß dafür, wieviel Wasserdampf von der Fremdgaszuführung 325 in die Arbeitsflüssigkeit kondensiert ist. Gleichzeitig ist der Druck in der Gasfalle P_{Falle} 374 ein Maß dafür, wieviel Fremdgas sich bereits angereichert hat. Mit zunehmendem angereichten Fremdgas steigt der Druck in dem Gehäuse 330 an, und bei Überschreiten eines bestimmten Drucks kann beispielsweise die Steuerung 373 aktiviert werden, um die Pumpe 342 einzuschalten, und zwar so lange, bis der Druck wieder in dem gewünschten niedrigen Bereich ist. Dann kann die Pumpe wieder ausgeschaltet werden.

Eine alternative Steuerungsgröße für die Pumpe ist beispielsweise die Differenz zwischen Tₑᵢₙ 375 und Tₐᵤₛ 376. Stellt sich beispielsweise heraus, dass die Differenz zwischen diesen beiden Werten kleiner als eine Minimaldifferenz ist, so heißt dies, dass aufgrund des angestiegenen Drucks in der Gasfalle kaum mehr Wasserdampf kondensiert. Daher ist es angezeigt, die Pumpe 342 einzuschalten, und zwar so lange, bis wieder eine Differenz oberhalb eines bestimmten Schwellenwerts vorhanden ist. Dann wird die Pumpe wieder ausgeschaltet.

Mögliche Messgrößen sind also Druck, Temperatur, z.B. an der Kondensationsstelle, ein Temperaturunterschied zwischen der Wasserzuführung und der Kondensationsstelle, eine treibende Druckerhöhung für den gesamten Kondensationsprozess etc. Wie es dargestellt ist, ist jedoch die einfachste Möglichkeit eine Steuerung über eine Temperaturdifferenz oder ein Zeitintervall, wofür keinerlei Sensoren nötig sind. Dies ist beim vorliegenden Ausführungsbeispiel ohne weiteres möglich, weil die Gasfalle eine sehr effiziente Fremdgasanreicherung schafft und daher Probleme bezüglich einer zu hohen Extraktion von Arbeitsdampf aus dem System nicht vorhanden sind, wenn die Pumpe nicht ununterbrochen betrieben wird.

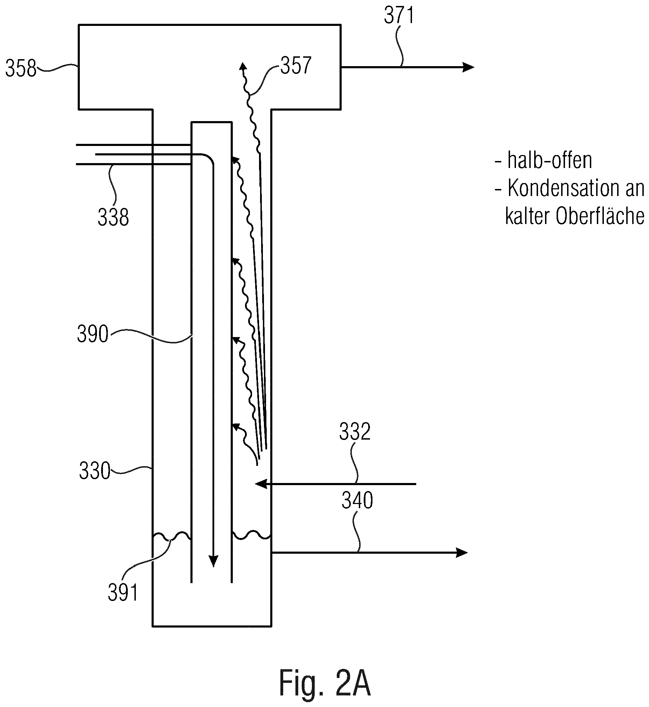

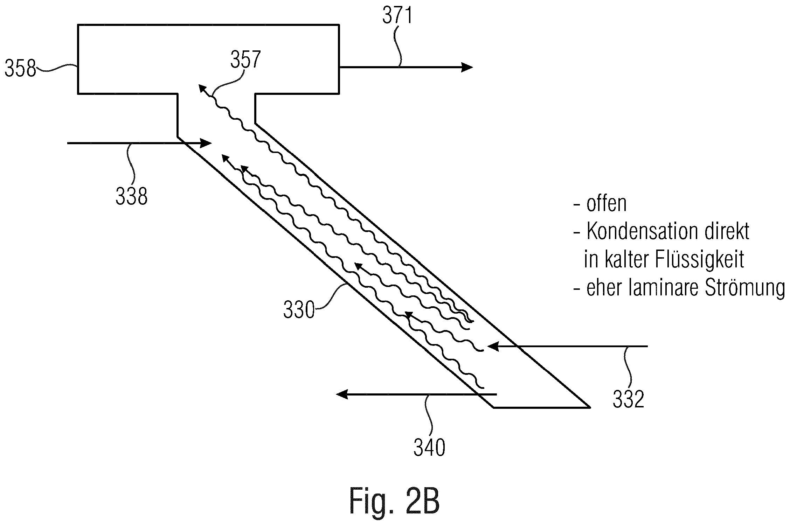

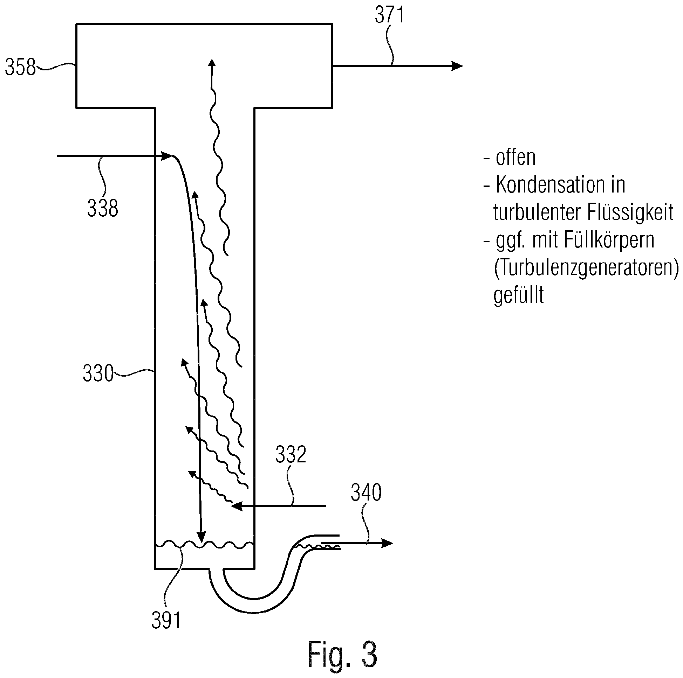

Fig. 2A, Fig. 2B und Fig. 3 zeigen verschiedene Implementierungen der Gasfalle. Fig. 2A zeigt eine halb-offene Variante der Gasfalle. Hierbei ist in der Gasfalle ein vorzugsweise aus Metall ausgebildetes Rohr 390 angeordnet, das mit dem Arbeitsflüssigkeitszulauf 338 gekoppelt ist. Die Arbeitsflüssigkeit läuft dann in dem Rohr nach unten zum Arbeitsflüssigkeitsablauf 340. Der Arbeitsmitteldampf, der durch die Zuführung 332 in die Gasfalle gebracht wird, kondensiert nunmehr nicht mehr direkt in der Arbeitsflüssigkeit, sondern an der (kalten) Oberfläche des Rohrs 390. Das Ende des Rohrs ist in einem Pegel 391 an Arbeitsflüssigkeit angeordnet, in das auch das an der Rohroberfläche kondensierte Wasser entlang des Rohrs nach unten strömt.

Fig. 2A zeigt also eine halb-offene Gasfalle mit einer Kondensation an einer kalten Oberfläche, nämlich der Oberfläche des Gegenstands 390.

Fig. 2B zeigt eine weitere Variante mit eher laminarer Strömung. Hier ist die Gasfalle schräg angeordnet bzw. das Gehäuse 330 ist schräg ausgebildet, so dass das Wasser von der Zuleitung 338 zur Ableitung 340 relativ ruhig, also wenig turbulent und eher laminar nach unten strömt. Der Dampf, der durch die Zuführung 332 zugeführt wird, kondensiert mit der laminaren Strömung, während sich Fremdgasanteile 357 im Fremdgasanreicherungsraum 358 sammeln. Wieder ist ein offenes System dargestellt, bei dem eine Kondensation direkt in der kalten Flüssigkeit stattfindet, die jedoch nunmehr eher eine laminare Strömung hat.

Fig. 3 zeigt eine weitere Variante mit offener Ausführung. Insbesondere findet eine sehr turbulente Strömung statt, nämlich direkt im Wesentlichen senkrecht von oben vom Zulauf 338 nach unten zum Ablauf 340. Ferner ist in Fig. 3 gezeigt, dass der Ablauf 340 in Form eines Siphons beispielsweise ausgebildet ist, damit unten im Gehäuse sichergestellt wird, dass ein Flüssigkeitspegel 391 gehalten wird. Damit wird erreicht, dass der Arbeitsmitteldampf, der durch die Zuführung 332 zugeführt wird, nicht direkt in den Verdampferablauf bzw. in die kalte Strömung, von der der Arbeitsmittelzulauf 338 abgezweigt wird, laufen kann, da dann das Fremdgas nicht abgeschieden werden würde, sondern direkt wieder auf der Verdampferseite in das System eingeführt werden würde.

Zur Verbesserung der Kondensation ist es insbesondere bei dem in Fig. 3 gezeigten Ausführungsbeispiel nützlich, das Gehäuse 330 mit Turbulenzgeneratoren zu füllen, dass die Strömung der Arbeitsflüssigkeit vom Zulauf 338 zum Ablauf 340 möglichst turbulent stattfindet.

Während also Fig. 2B, Fig. 3 und auch Fig. 1B offene Varianten darstellen, bei denen eine Kondensation direkt in der kalten Flüssigkeit stattfindet, zeigt Fig. 2A eine Variante, bei der die Kondensation an einer kalten Oberfläche eines Vermittlungselements 390, wie beispielsweise des in Fig. 2A beschriebenen Rohrs, stattfindet, welches deswegen eine kalte Oberfläche hat, weil im Inneren des Vermittlungselements die kalte Arbeitsflüssigkeit vom Zulauf 338 zum Ablauf 340 fließt. Je nach Implementierung kann jedoch die Kühlung auch durch andere Varianten erreicht werden, also durch irgendeine andere Maßnahme unter Verwendung interner Flüssigkeiten/Dämpfe oder externer Kühlungsmaßnahmen, um eine effiziente Gasfalle in der Wärmepumpe zu haben, die über die Fremdgaszuführungsleitung 325 mit dem Kondensierer 306 gekoppelt ist.

Vorzugsweise ist das Gehäuse 330 länglich ausgebildet, und zwar als Rohr, das oben im Fremdgasanreicherungsraum 328 einen Durchmesser von 50 mm oder größer hat und unten, also im Kondensationsbereich, einen Durchmesser von 25 mm oder größer hat. Ferner wird es bevorzugt, dass der Kondensationsbereich bzw. Strömungsbereich, also die Differenz zwischen dem Zulauf 338 und dem Ablauf 340 bezüglich der senkrechten Höhe wenigstens 20 cm lang ist. Darüber hinaus wird es bevorzugt, dass eine Strömung stattfindet, dass also die Gasfalle wenigstens einen senkrechten Anteil hat, obgleich sie schräg angeordnet sein kann. Eine komplett waagrechte Gasfalle wird dagegen nicht bevorzugt, ist aber möglich, solange im Betriebe eine Arbeitsflüssigkeitsströmung von der Arbeitsflüssigkeitszuleitung zu der Arbeitsflüssigkeitsableitung in dem Gehäuse stattfindet.

Fig. 4 zeigt eine Implementierung einer Wärmepumpe mit zwei Stufen. Die erste Stufe wird durch den Verdampfer 300, den Verdichter 302 und den Kondensierer 306 gebildet. Die zweite Stufe wird durch einen Verdampfer 500, einen Verdichter 502 und einen Kondensierer 506 gebildet. Der Verdampfer 500 ist über eine Dampfansaugleitung 504 mit dem Verdichter 502 verbunden, und der Verdichter 502 ist über eine Leitung für komprimierten Dampf, die mit 505 bezeichnet ist, mit dem Kondensierer 506 verbunden. Das System aus den zwei (oder mehr Stufen) umfasst einen Ablauf 522 und einen Zulauf 520. Der Ablauf 522 und der Zulauf 520 sind mit einem Wärmetauscher 598 verbunden, der mit einem zu wärmenden Gebiet koppelbar ist. Typischerweise findet dies kundenseitig statt und ist das zu wärmende Gebiete eine Wärmesenke, wie beispielsweise eine Ablufteinrichtung im Beispiel einer Kühlungsanwendung oder eine Heizungseinrichtung im Beispiel einer Heizungseinrichtung.

Darüber hinaus sind der Zulauf 310 in das System 300 und der Ablauf 312 aus dem System 300 ebenfalls mit einem Wärmetauscher 398 gekoppelt, der wiederum typischerweise kundenseitig mit einem zu kühlenden Gebiet 308 koppelbar ist. Beim Beispiel einer Kühlanwendung für die Wärmepumpe ist das zu kühlende Gebiet ein zu kühlender Raum, wie beispielsweise ein Rechnerraum, ein Prozessraum, etc. Beim Beispiel einer Heizungsanwendung für die Wärmepumpe wäre das zu kühlende Gebiet z.B. ein Umweltbereich, z. B. Luft im Falle einer Luftwärmepumpe, Boden im Falle einer Wärmepumpe mit Erdkollektoren oder ein Grundwasser/Meerwasser/Sole-Bereich, aus dem Wärme zu Heizzwecken entnommen werden soll.

Die Kopplung zwischen den beiden Wärmepumpenstufen kann je nach Implementierung stattfinden. Falls die Kopplung so stattfindet, dass eine Stufe gewissermaßen eine "kalte" Stufe oder " kalte Dose" ist, ist die zweite Stufe die gewissermaßen "warme" Stufe oder "warme Dose" darstellt. Diese Bezeichnung rührt daher, dass die Temperaturen in den jeweiligen Elementen in der erste Stufe kälter als in der zweiten Stufe sind, wenn beide Stufen in Betrieb sind.

Besonders vorteilhaft an der vorliegenden Erfindung ist die Tatsache, dass die Kondensierer der zweiten und von eventuell noch vorhandenen weiteren Stufen alle mit ein und derselben Gasfalle bzw. mit ein und demselben Gasfallengehäuse 330 verbunden werden können. So ist in Fig. 4 gezeigt, dass die Fremdgaszuführungsleitung 325 des ersten Kondensierers 306 mit dem Gehäuse 330 gekoppelt ist. Darüber hinaus ist auch eine weitere Fremdgaszuführungsleitung 525 von dem zweiten Kondensierer 506 mit dem Eingang 334 gekoppelt. Es wird bevorzugt, die kalte Dose bzw. den Kondensierer der kalten Dose, also z. B. der ersten Stufe, also den Kondensierer 306 weiter oben in dem Gehäuse 330 der Gasfalle anzukoppeln als den Kondensierer der zweiten Stufe, also der warmen Dose. Damit wird sichergestellt, dass dort, wo die größten Fremdgasprobleme auftreten können, eine möglichst lange Strecke in der Gasfalle zur Kondensation und Fremdgasanreicherung verbleibt. Der Arbeitsdampf, der mit Fremdgas gemischt ist, kann von dem Eingang 334 länger an der Arbeitsflüssigkeitsströmung vom Eingang 338 zum Ausgang 340 vorbeifließen als die Strömung aus Arbeitsdampf und Fremdgas von der Fremdgaszuführungsleitung 325. Je nach Implementierung können jedoch auch sämtliche Fremdgaszuführungsleitungen ganz unten angekoppelt werden, also über den einen einzigen Eingang 334, wenn hierbei das Gehäuse 330 der Gasfalle ausreichend Platz lässt. Darüber hinaus ist in Fig. 4 gezeigt, dass die Arbeitsflüssigkeit für die Gasfalle an der kältesten Stelle des gesamten Systems aus zwei Wärmepumpenstufen abgezapft wird, nämlich am Ablauf 312 des Verdampfers 300 der ersten Stufe, der mit dem Wärmetauscher 398 gekoppelt ist. Obgleich in Fig. 4 nicht dargestellt, wäre typischerweise zwischen der Abzweigung 352 und der Abzweigung 350 die Pumpe 314 von Fig. 1B angeordnet. Alternative Ausführungen können jedoch ebenfalls gewählt werden.

Ferner sei darauf hingewiesen, dass die Abzweigung an Arbeitsflüssigkeit in die Gasfalle kleiner oder gleich 1 % vom Hauptstrom, also von dem gesamten Strom vom Verdampfer 1 300 zu dem Wärmetauscher 398 stattfindet und vorzugsweise sogar kleiner oder gleich 1 ‰ ist.

Dasselbe gilt für die Abzweigung von Dampf aus dem Kondensierer über die Zuführungsleitung 325 oder 525. Hier ist typischerweise der Querschnitt der Leitung von dem Kondensierer in das Gehäuse 330 so ausgebildet, dass höchstens 1 % vom Hauptgasstrom in den Kondensierer hinein oder vorzugsweise sogar kleiner oder gleich 1 ‰ vom Gasstrom in den Kondensierer hinein abgezweigt wird. Da jedoch die komplette Regelung automatisch aufgrund des Druckunterschieds von dem jeweiligen Kondensierer in die Gasfalle stattfindet, ist die genaue Dimensionierung hier für die Funktionalität nicht wesentlich.

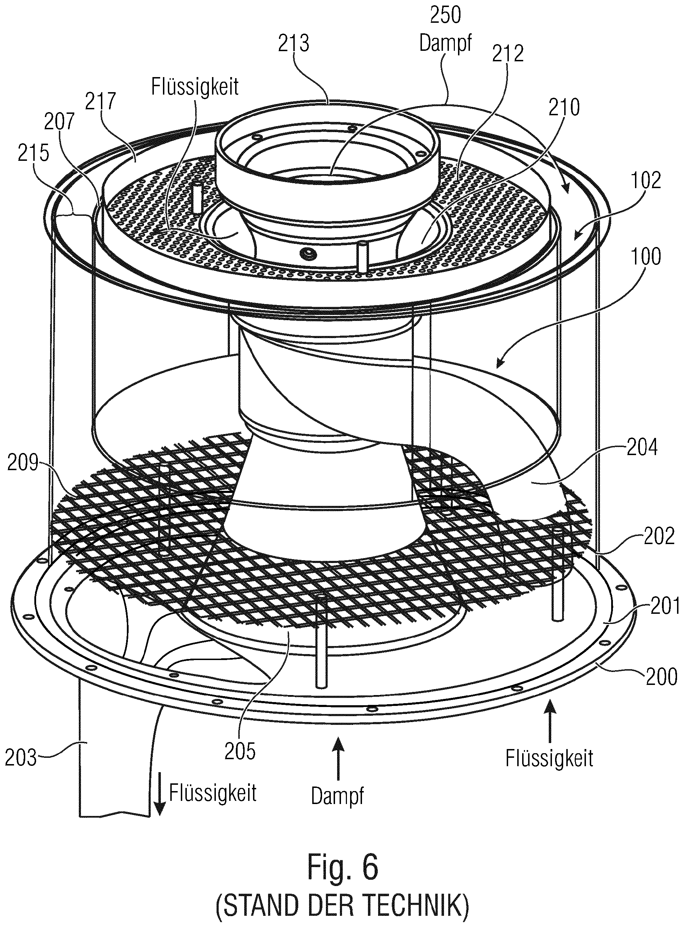

Fig. 6 zeigt einen Verflüssiger, wobei der Verflüssiger in Fig. 6 eine Dampfeinleitungszone 102 aufweist, die sich vollständig um die Kondensationszone 100 herum erstreckt. Insbesondere ist in Fig. 6 ein Teil eines Verflüssigers dargestellt, der einen Verflüssigerboden 200 aufweist. Auf dem Verflüssigerboden ist ein Verflüssigergehäuseabschnitt 202 angeordnet, der aufgrund der Darstellung in Fig. 6 durchsichtig gezeichnet ist, der jedoch in Natur nicht unbedingt durchsichtig sein muss, sondern z.B. aus Kunststoff, Aluminiumdruckguss oder etwas Ähnlichem gebildet sein kann. Das seitliche Gehäuseteil 202 liegt auf einem Dichtungsgummi 201 auf, um eine gute Abdichtung mit dem Boden 200 zu erreichen. Ferner umfasst der Verflüssiger einen Flüssigkeitsablauf 203 sowie einen Flüssigkeitszulauf 204 sowie eine in dem Verflüssiger zentral angeordnete Dampfzuführung 205, die sich von unten nach oben in Fig. 6 verjüngt. Es sei darauf hingewiesen, dass Fig. 6 die eigentlich gewünschte Aufstellrichtung einer Wärmepumpe und eines Verflüssigers dieser Wärmepumpe darstellt, wobei in dieser Aufstellrichtung in Fig. 6 der Verdampfer einer Wärmepumpe unterhalb des Verflüssigers angeordnet ist. Die Kondensationszone 100 wird nach außen durch einen korbartigen Begrenzungsgegenstand 207 begrenzt, der ebenso wie das äußere Gehäuseteil 202 durchsichtig gezeichnet ist und normalerweise korbartig ausgebildet ist.

Ferner ist ein Gitter 209 angeordnet, das ausgebildet ist um Füllkörper, die in Fig. 6 nicht gezeigt sind, zu tragen. Wie es aus Fig. 6 ersichtlich aus, erstreckt sich der Korb 207 lediglich bis zu einem gewissen Punkt nach unten. Der Korb 207 ist dampfdurchlässig vorgesehen, um Füllkörper zu halten, wie beispielsweise sogenannte Pallringe. Diese Füllkörper werden in die Kondensationszone eingebracht, und zwar lediglich innerhalb des Korbs 207, jedoch nicht in der Dampfeinleitungszone 102. Die Füllkörper werden jedoch so hoch auch außerhalb des Korbs 207 eingefüllt, dass sich die Höhe der Füllkörper entweder bis zu der unteren Begrenzung des Korbs 207 oder etwas darüber erstreckt.

Der Verflüssiger von Fig. 6 umfasst einen Arbeitsflüssigkeitszuführer, der insbesondere durch die Arbeitsflüssigkeitszuführung 204, die, wie es in Fig. 6 gezeigt ist, gewunden um die Dampfzuführung in Form einer aufsteigenden Windung angeordnet ist, durch einen Flüssigkeitstransportbereich 210 und durch ein Flüssigkeitsverteilerelement 212 gebildet wird, das vorzugsweise als Lochblech ausgebildet ist. Insbesondere ist der Arbeitsflüssigkeitszuführer also ausgebildet, um die Arbeitsflüssigkeit in die Kondensationszone zuzuführen.

Darüber hinaus ist auch ein Dampfzuführer vorgesehen, der sich, wie es in Fig. 6 gezeigt ist, vorzugsweise aus dem trichterförmig sich verjüngenden Zuführungsbereich 205 und dem oberen Dampfführungsbereich 213 zusammensetzt. In dem Dampfleitungsbereich 213 wird vorzugsweise ein Rad eines Radialkompressors eingesetzt und die Radialkompression führt dazu, dass durch die Zuführung 205 Dampf von unten nach oben gesaugt wird und dann aufgrund der Radialkompression durch das Radialrad bereits gewisserma-ßen 90 Grad nach außen umgelenkt wird, also von einer Strömung von unten nach oben zu einer Strömung von der Mitte nach außen in Fig. 6 bezüglich des Elements 213.

In Fig. 6 nicht gezeigt ist ein weiterer Umlenker, der den bereits nach außen umgelenkten Dampf noch einmal um 90 Grad umlenkt, um ihn dann von oben in den Spalt 215 zu leiten, der gewissermaßen den Beginn der Dampfeinleitungszone darstellt, die sich seitlich um die Kondensationszone herum erstreckt. Der Dampfzuführer ist daher vorzugsweise ringförmig ausgebildet und mit einem ringförmigen Spalt zum Zuführen des zu kondensierenden Dampfes versehen, wobei die Arbeitsflüssigkeitszuführung innerhalb des ringförmigen Spalts ausgebildet ist.

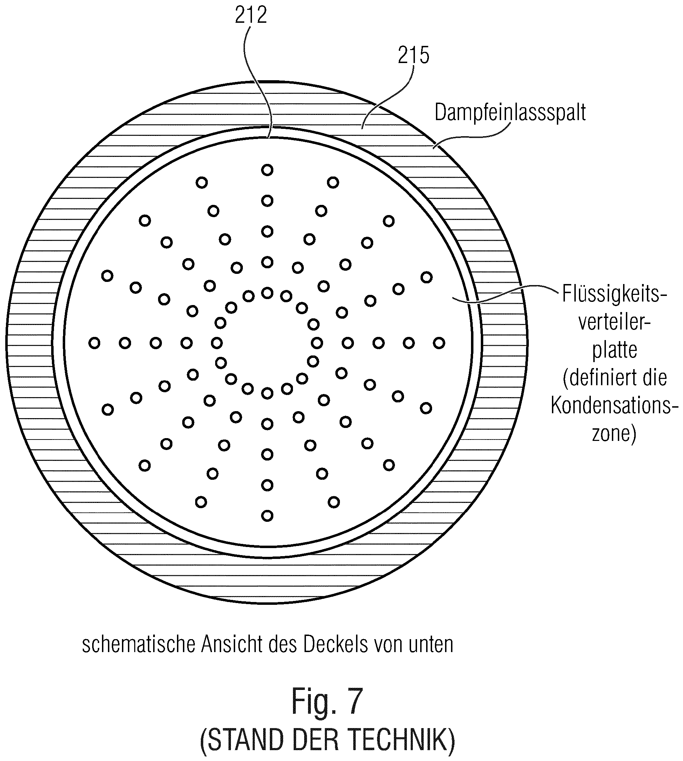

Zur Veranschaulichung wird auf Fig. 7 verwiesen. Fig. 7 zeigt eine Ansicht des "Deckelbereichs" des Verflüssigers von Fig. 6 von unten. Insbesondere ist das Lochblech 212 von unten schematisch dargestellt, das als Flüssigkeitsverteilerelement wirkt. Der Dampfeinlassspalt 215 ist schematisch gezeichnet, und es ergibt sich aus Fig. 7, dass der Dampfeinlassspalt lediglich ringförmig ausgebildet ist, derart, dass in die Kondensationszone direkt von oben bzw. direkt von unten kein zu kondensierender Dampf eingespeist wird, sondern nur seitlich herum. Durch die Löcher des Verteilerblechs 212 fließt somit lediglich Flüssigkeit, jedoch kein Dampf. Der Dampf wird erst seitlich in die Kondensationszone "eingesaugt", und zwar aufgrund der Flüssigkeit, die durch das Lochblech 212 hindurchgetreten ist. Die Flüssigkeitsverteilerplatte kann aus Metall, Kunststoff oder einem ähnlichen Material ausgebildet sein und ist mit unterschiedlichen Lochmustern ausführbar. Ferner wird es, wie es in Fig. 6 gezeigt ist, bevorzugt eine seitliche Begrenzung für aus dem Element 210 fließende Flüssigkeit vorzusehen, wobei diese seitliche Begrenzung mit 217 bezeichnet ist. Damit wird sichergestellt, dass Flüssigkeit, die aus dem Element 210 aufgrund der geschwungenen Zuführung 204 bereits mit einem Drall austritt und sich von innen nach außen auf dem Flüssigkeitsverteiler verteilt, nicht über den Rand in die Dampfeinleitungszone spritzt, sofern die Flüssigkeit nicht bereits vorher durch die Löcher der Flüssigkeitsverteilerplatte getropft und mit Dampf kondensiert ist.

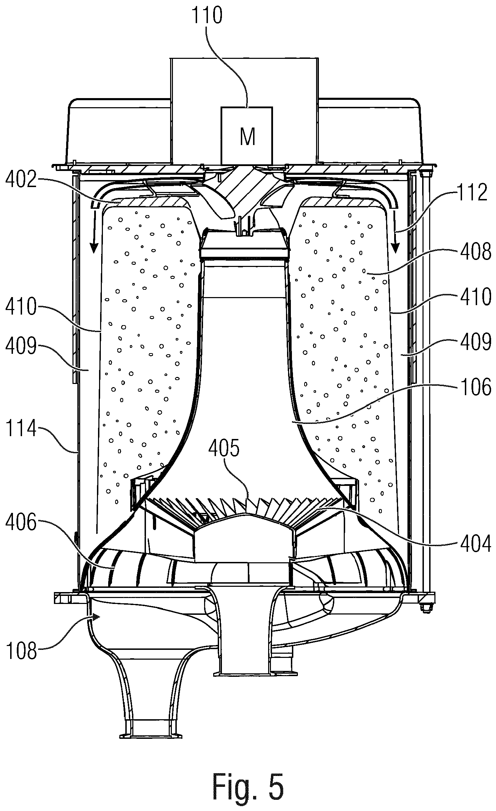

Fig. 5 zeigt eine komplette Wärmepumpe in Schnittdarstellung, die sowohl den Verdampferboden 108 als auch den Kondensatorboden 106 umfasst. Wie es in Fig. 5 oder auch in Fig. 1 gezeigt ist, hat der Kondensatorboden 106 einen sich verjüngenden Querschnitt von einem Zulauf für die zu verdampfende Arbeitsflüssigkeit zu einer Absaugöffnung 115, die mit dem Kompressor bzw. Motor 110 gekoppelt ist, wo also das vorzugsweise verwendete Radialrad des Motors den im Verdampferraum 102 erzeugten Dampf absaugt.

Fig. 5 zeigt einen Querschnitt durch die gesamte Wärmepumpe. Insbesondere ist innerhalb des Kondensatorbodens ein Tropfenabscheider 404 angeordnet. Dieser Tropfenabscheider umfasst einzelne Schaufeln 405. Diese Schaufeln sind, damit der Tropfenabscheider an Ort und Stelle bleibt, in entsprechenden Nuten 406 eingebracht, die in Fig. 5 gezeigt sind. Diese Nuten sind in dem Kondensatorboden in einem Bereich, der zu dem Verdampferboden hin gerichtet ist, in der Innenseite des Verdampferbodens angeordnet. Darüber hinaus hat der Kondensatorboden ferner diverse Führungsmerkmale, die als Stäbchen oder Zungen ausgebildet sein können, um Schläuche zu halten, die für eine Kondensatorwasserführung beispielsweise vorgesehen sind, die also auf entsprechende Abschnitte aufgesteckt werden und die Einspeisepunkte der Kondensatorwasserzuführung ankoppeln. Diese Kondensatorwasserzuführung 402 kann je nach Implementierung so ausgebildet sein, wie es in den Fig. 6 und 7 bei den Bezugszeichen 102, 207 bis 250 gezeigt ist. Ferner hat der Kondensator vorzugsweise eine Kondensatorflüssigkeitsverteilungsanordnung, die zwei oder auch mehr Einspeisepunkte aufweist. Ein erster Einspeisepunkt ist daher mit einem ersten Abschnitt eines Kondensatorzulaufs verbunden. Ein zweiter Einspeisepunkt ist mit einem zweiten Abschnitt des Kondensatorzulaufs verbunden. Sollten mehr Einspeisepunkte für die Kondensatorflüssigkeitsverteilungseinrichtung vorhanden sein, so wird der Kondensatorzulauf in weitere Abschnitte aufgeteilt sein.

Der obere Bereich der Wärmepumpe von Fig. 5 kann somit genauso wie der obere Bereich in Fig. 6 ausgebildet sein, dahin gehend, dass die Kondensatorwasserzuführung über das Lochblech von Fig. 6 und Fig. 7 stattfindet, so dass abwärts rieselndes Kondensatorwasser 408 erhalten wird, in das der Arbeitsdampf 112 vorzugsweise seitlich eingeführt wird, so dass die Querstrom-Kondensation, die eine besonders hohe Effizienz erlaubt, erhalten werden kann. Wie es auch in Fig. 6 dargestellt ist, kann die Kondensationszone mit einer lediglich optionalen Füllung versehen sein, bei der der Rand 207, der auch mit 409 bezeichnet ist, frei bleibt von Füllkörpern oder ähnlichen Dingen, dahin gehend, dass der Arbeitsdampf 112 nicht nur oben, sondern auch unten noch seitlich in die Kondensationszone eindringen kann. Die gedachte Begrenzungslinie 410 soll das in Fig. 5 veranschaulichen. Bei dem in Fig. 5 gezeigten Ausführungsbeispiel ist jedoch der gesamte Bereich des Kondensators mit einem eigenen Kondensatorboden 200 ausgebildet, der oberhalb eines Verdampferbodens angeordnet ist.

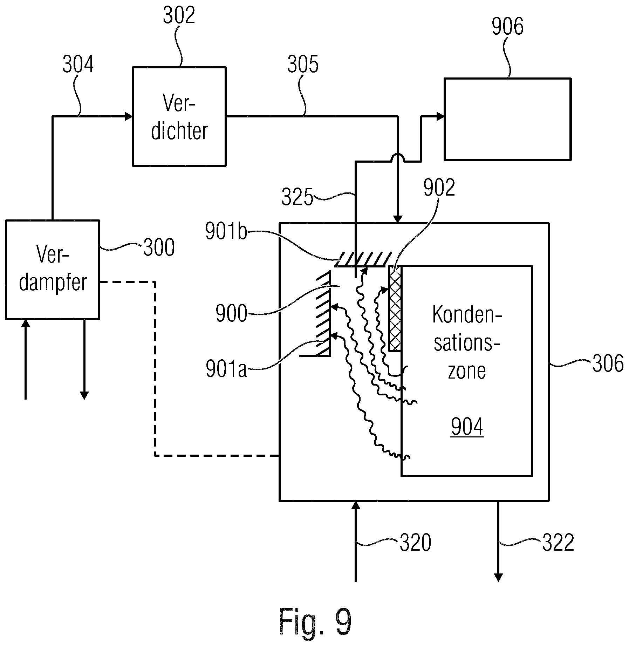

Nachfolgend wird Bezug nehmend auf Fig. 9 eine Wärmepumpe gemäß dem zweiten Aspekt beschrieben, welcher separat von dem ersten Aspekt, der bisher beschrieben worden ist, oder zusätzlich zum ersten Aspekt eingesetzt werden kann. Die Wärmepumpe gemäß dem zweiten Aspekt umfasst einen Kondensierer 306, der genauso ausgebildet sein kann, wie der vorstehend beschriebene Kondensierer zum Kondensieren von erwärmtem bzw. verdichtetem Arbeitsdampf, der über die Leitung 305 für erwärmten Arbeitsdampf dem Kondensierer 306 zugeführt wird. Der Kondensierer 306 umfasst nunmehr gemäß dem zweiten Aspekt jedoch einen Fremdgassammelraum 900, der in dem Kondensierer 306 angeordnet ist. Der Fremdgassammelraum umfasst eine Kondensationsoberfläche 901a, 901b, die im Betrieb kälter als eine Temperatur des zu kondensierenden Arbeitsdampfes ist. Ferner umfasst der Fremdgassammelraum 900 eine Trennwand 902, die zwischen der Kondensationsoberfläche 901a, 901b und einer Kondensationszone 904 in dem Kondensierer 306 angeordnet ist. Darüber hinaus ist eine Fremdgasabführungseinrichtung 906 vorgesehen, die mit dem Fremdgassammelraum 900 beispielsweise über die Fremdgaszuführungsleitung 325 gekoppelt ist, um Fremdgas aus dem Fremdgassammelraum 900 abzuführen. Die Fremdgasabführungseinrichtung 906 umfasst beispielsweise eine Kombination aus einer Pumpe, wie beispielsweise der Pumpe 342, aus einer Ansaugleitung 371 und aus einer Ausstoßleitung 372, wie sie in Fig. 1B beschrieben ist. Dann würde aus dem Fremdgassammelraum gewissermaßen direkt nach außen abgesaugt werden.

Alternativ ist die Fremdgasabführungseinrichtung 906 als Gasfalle ausgebildet, mit dem Gehäuse und dem Zu/Ableitungen, wie sie anhand von Fig. 1B, Fig. 2A, Fig. 2B, Fig. 3, Fig. 4 beschrieben worden ist. Dann würde die Fremdgasabführungseinrichtung zusätzlich zu der Pumpe 342, der Ansaugleitung 371 und der Ausstoßleitung 372 auch die Gasfalle umfassen. Dies würde eine gewissermaßen "indirekte" Fremdgasabführung darstellen, bei der zunächst aus dem Fremdgassammelraum bereits angereichertes Fremdgas zusammen mit Arbeitsdampf in die Gasfalle gebracht wird, wo die Anreicherung von Fremdgas durch weitere Kondensation von Arbeitsdampf noch erhöht wird, bis dann durch die Pumpe abgesaugt wird. Die Kombination des ersten und des zweiten Aspekts der vorliegenden Erfindung stellt also eine gewissermaßen zweistufige Anreicherung von Fremdgas dar, also eine erste Anreicherung im Fremdgassammelraum 900 und eine zweite Anreicherung im Fremdgasanreicherungsraum 358 der Gasfalle von Fig. 1B, bevor dann Fremdgas abgesaugt wird. Alternativ kann jedoch auch eine einstufige Fremdgasanreicherung stattfinden, nämlich entweder durch den Fremdgassammelraum 900 von Fig. 9, aus dem dann direkt abgesaugt wird, also ohne dazwischenliegende Gasfalle mit Gasfallengehäuse 330, oder, alternativ, durch eine Absaugung aus dem Kondensierer 306 ohne Fremdgassammelraum 900, wie es anhand von Fig. 1B beispielsweise beschrieben worden ist.

Aufgrund der optimalen Fremdgasanreicherung und der damit verbundenen Vereinfachungen im Hinblick auf Befüllung und Entsorgung von abgesaugtem Arbeitsdampf wird es jedoch bevorzugt, die zweistufige Variante zu wählen, also die Kombination von Aspekt 1 und Aspekt 2 der vorliegenden Erfindung.

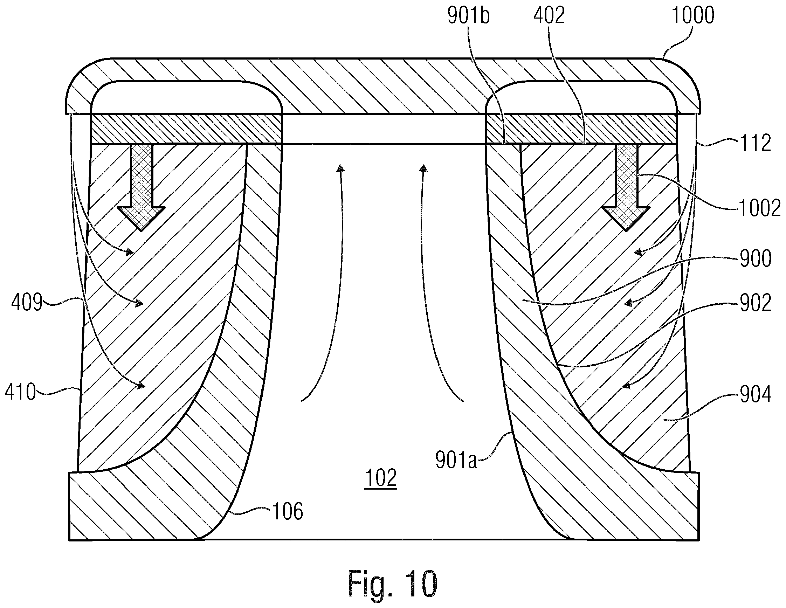

Fig. 10 zeigt eine schematische Anordnung einer Wärmepumpen mit verschränkter Ausführung, wie sie beispielsweise in Fig. 1 und Fig. 5 dargestellt ist. Insbesondere ist der Verdampferraum 102 innerhalb des Kondensiererraums 104 angeordnet. Der Dampf wird über eine Dampfzuführung 1000, nachdem er durch einen Motor, der in Fig. 10 nicht gezeigt ist, komprimiert worden ist, seitlich, wie es bei 112 gezeigt ist, in die Kondensationszone 904 zugeführt. Darüber hinaus ist eine, bei dem in Fig. 10 gezeigten Ausführungsbeispiel etwa kegelstumpfförmige, Trennwand 902 im Querschnitt dargestellt, die die Kondensationszone 904 von der Kondensationsoberfläche 106, die durch den Kondensatorboden gebildet ist, und von der weiteren Kondensationsoberfläche 901b, die durch die Wasser- bzw. Kondensiererflüssigkeitszuführung 402 gebildet ist, getrennt. Damit ergibt sich zwischen der Trennwand 902 einerseits und der Oberfläche 106, die auch der Kondensationsoberfläche 901a von Fig. 9 entspricht, und dem oberen Bereich 901b der Wasserzuführung 402 der Fremdgassammelraum 900, der im Vergleich zu den Verhältnissen in den Kondensationszone 904 ein beruhigte Zone darstellt.

Die Trennwand 901a hat auf der dem Kondensator zugewandten Seite eine Temperatur unterhalb der Sattdampftemperatur im Kondensator. Außerdem hat die Trennwand 901a auf der dem Verdampfer zugewandten Seite eine Temperatur über der dort herrschenden Sattdampftemperatur. Damit wird sichergestellt, dass der Saugmund bzw. Dampfkanal trocken ist und keine Wassertropfen im Dampf vorhanden sind, insbesondere dann, wenn der Verdichtermotor aktiviert wird. Damit wird vermieden, dass das Impellerrad durch Tropfen im Dampf beschädigt wird.

Insbesondere lässt die Wasserdampfzuführung ständig Wasserdampf 112 zuströmen, wobei hierbei Größenordnungen von typischerweise wenigstens 1 I Wasserdampf pro Sekunde zuströmen. Der Druck des Wasserdampfes ist gleich oder höher als der resultierende Sattdampfdruck des durch die Wasserzuführung 402 zugeführten Kondensiererwassers, das auch mit 1002 in Fig. 10 bezeichnet ist. Hier fließen typischerweise wenigstens 0,1 l/s an Kondensiererarbeitsflüssigkeit 1002 zu. Die Kondensiererflüssigkeit strömt oder fällt vorzugweise möglichst turbulent herunter und der zugeführte Wasserdampf 112 kondensiert bereits größtenteils in das bewegte Wasser. Der Wasserdampf verschwindet also im Wasser und übrig bleibt das Fremdgas. Die Trennwand 902 leitet das kondensierte Wasser und das zugeströmte Wasser nach unten ab und sorgt gleichzeitig für die beruhigte Zone, durch die sich der Fremdgassammelraum 900 ergibt. Diese Zone bildet sich unter der Trennwand 902 aus. Hier findet die Fremdgasanreicherung statt.

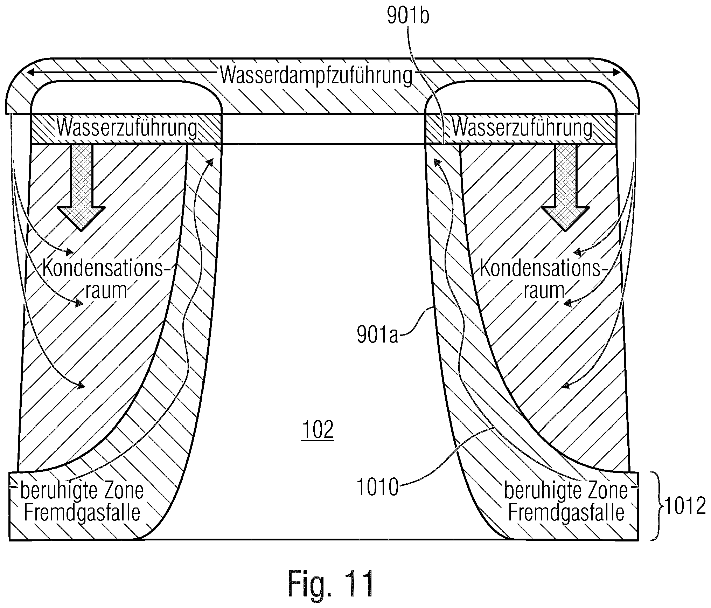

Eine Funktionalitätsdarstellung ist in Fig. 11 gegeben. Hier ist insbesondere dargestellt, dass ein kleiner Teil des Wasserdampfes zu der kalten Wasserdampfzuführung 901b strömt, um dort zu kondensieren. Vorzugsweise ist dieser Bereich 901b der Wassserzuführung, in der im Kondensierer zu erwärmende Arbeitsflüssigkeit, die Wasser sein kann, jedoch nicht unbedingt sein muss, die eher relativ kalte Stelle im Kondensierer. Diese Wasserdampfzuführung ist ferner vorzugsweise aus Metall gebildet, das eine gute Wärmeleitfähigkeit hat, so dass die kleine Menge an Wasserdampf 1010, die in dem beruhigten Raum, d.h. in dem Fremdgassammelraum nach oben fließt, eine "kalte Oberfläche" "sieht". Gleichzeitig sei jedoch darauf hingewiesen, dass auch die Wand des Verdampfer-Saugmunds, die mit 901a bezeichnet ist, ebenfalls relativ kalt ist. Obgleich diese Wand vorzugsweise aus Kunststoff ausgebildet ist, aufgrund der leichteren Formbarkeit, das einen relativ schlechten Wärmeleitungsfähigkeitskoeffizienten hat, ist dennoch der Verdampferraum 102 der nahezu kälteste Bereich der gesamten Wärmepumpe. Damit sieht der Wasserdampf 1010, der typischerweise durch einen Spalt 1012 in den Fremdgassammelraum eintritt, auch an der seitlichen Wand 901a eine Kältesenke, die den Wasserdampf motiviert, zu kondensieren. Durch diese Wasserdampfströmung, wie sie durch den Pfeil 1010 in Fig. 11 symbolisiert ist, werden Fremdgasatome mit in den Fremdgassammelraum hineingetragen. Das Fremdgas wird also mitgerissen und sammelt sich, weil es nicht kondensieren kann, in der gesamten beruhigten Zone an.

Hört die Kondensation auf, ist der Fremdgasanteil und damit der Partialdruck höher. Dann oder bereits bei abnehmender Kondensation ist es nötig, dass die Fremdgasabführungseinrichtung Fremdgas abführt, beispielsweise mittels einer angeschlossenen Vakuumpumpe, die aus der beruhigten Zone, also aus dem Fremdgassammelraum absaugt. Diese Absaugung kann geregelt geschehen, kann kontinuierlich geschehen oder kann gesteuert passieren. Mögliche Messgrößen sind Druck, Temperatur an der Kondensationsstelle, ein Temperaturunterschied zwischen der Wasserzuführung und der Kondensationsstelle, eine treibende Druckerhöhung für den gesamten Kondensationsprozess zur Wasseraustrittstemperatur, etc. Alle diese Größen können für eine Regelung benutzt werden. Gesteuert kann aber einfach auch durch eine Zeitintervallsteuerung, die eine bestimmte Zeitdauer die Vakuumpumpe einschaltet und dann wieder ausschaltet.

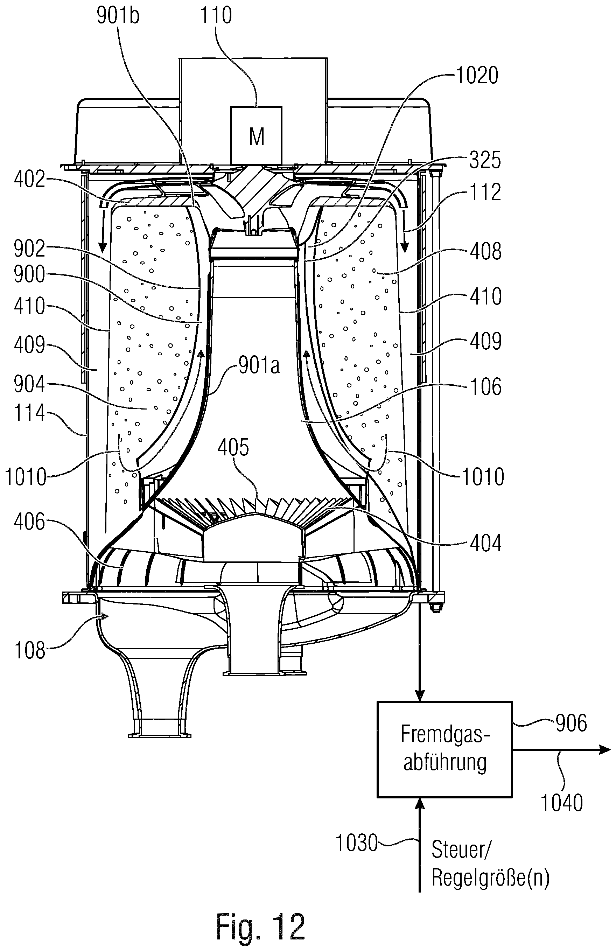

Fig. 12 zeigt eine detailliertere Darstellung einer Wärmepumpe mit einem Kondensierer, der die Trennwand aufweist, anhand der in Fig. 5 querschnittsmäßig dargestellten Wärmepumpe. Insbesondere ist wieder die Trennwand 902 im Querschnitt dargestellt, die den Fremdgassammelraum 900 von der Kondensationszone 408 oder 904 trennt, so dass eine Zone geschaffen wird, nämlich der Fremdgassammelraum 900, in dem im Vergleich zur sonstigen Kondensationszone ein "beruhigtes Klima" herrscht, in das die Wasserdampfströmung 1010 eintritt, die gleichzeitig Fremdgas, das in der Kondensationszone vorhanden ist, mithineinträgt. Ferner ist als Absaugeinrichtung ein Schlauch 325 vorgesehen. Der Absaugschlauch 325 ist vorzugsweise oben in dem Fremdgassammelraum angeordnet, wie es bei 1020 angedeutet ist, wo das Schlauchende im Fremdgassammelraum angeordnet ist. Die Wände des Fremdgassammelraums werden gebildet durch die Kondensationsoberfläche 901a bezüglich der einen Seite, durch den Wasserzuführungsabschnitt 901b nach oben und durch die Trennwand 902 bezüglich der anderen Seite. Der Schlauch 325, also die Fremdgasabführung, wird vorzugsweise durch den Verdampferboden herausgeführt, jedoch so, dass der Schlauch nicht durch den Verdampfer, in dem ein besonders niedriger Druck herrscht, hindurchführt, sondern an diesem vorbeiführt. Ferner ist der Kondensierer so ausgebildet, dass ein gewisser Pegel an Kondensiererflüssigkeit vorhanden ist. Dieser Pegel ist jedoch derart gestaltet bezüglich seiner Höhe, dass die Trennwand 902 von dem Pegel um den Spalt 1012 von Fig. 11 entfernt ist, so dass die Wasserdampfströmung 1010 in den Fremdgassammelraum eintreten kann.

Vorzugsweise ist die Trennwand 902 bei dem in den Fig. 9 bis 12 dargestellten Ausführungsbeispielen nach oben hin abgedichtet, so dass die Arbeitsflüssigkeits- oder "Was-ser"-Zuführung 402 lediglich Arbeitsflüssigkeit in die Kondensationszone 904 zuführt, nicht jedoch in die beruhigte Zone. Bei anderen Ausführungsbeispielen muss diese Abdichtung jedoch nicht besonders dicht sein. Es reicht eine lose Abdichtung, die dazu dient, dass die beruhigte Zone entstehen kann. Eine im Vergleich zum Kondensationsraum beruhigte Zone im Fremdgassammelraum entsteht bereits dadurch, dass in den Fremdgassammelraum weniger Arbeitsflüssigkeit zugeführt wird als in der Kondensationszone, so dass die Umgebung dort weniger turbulent ist als außerhalb der Trennwand. Die Wasserzuführung könnte somit so ausgebildet sein, dass im Fremdgassammelraum immer noch etwas Wasser zugeführt wird, um eine effiziente Kondensation von Wasserdampf zu erreichen, der, wie es schematisch bei 1010 gezeichnet ist, in den Fremdgassammelraum fließt und dabei das Fremdgas mitnimmt. Der Fremdgassammelraum sollte jedoch so ruhig sein, dass sich das Fremdgas dort auch anreichern kann und nicht wieder entgegen der Strömung 1010 unter der Trennwand herausgebracht wird und sich wieder unerwünschterweise im Kondensierer verteilt.

Wie es in Fig. 12 ferner gezeigt ist, ist die Fremdgasabführungseinrichtung 906 ausgebildet, um anhand von entsprechenden Steuer/Regelgrößen 1030 zu arbeiten und angereichertes Fremdgas aus dem Fremdgassammelraum 900 nach außen oder in eine weitere Gasfalle abzuführen, wie es bei 1040 angedeutet ist.

## Patentansprüche

1. Wärmepumpe, mit folgenden Merkmalen:
einem Kondensierer (306) zum Kondensieren von verdichtetem Arbeitsdampf;
einer Gasfalle, die durch eine Fremdgaszuführung (325) mit dem Kondensierer (306) gekoppelt ist und folgende Merkmale aufweist:
ein Gehäuse (330) mit einem Fremdgaszuführungseingang (332);
eine Arbeitsflüssigkeitszuleitung (338) in dem Gehäuse (330); und
eine Arbeitsflüssigkeitsableitung (340) in dem Gehäuse (330); und
einer Gaspumpe (342) zum Abpumpen von Gas aus dem Gehäuse (330),
wobei das Gehäuse (330), die Arbeitsflüssigkeitszuleitung (338) und die Arbeitsflüssigkeitsableitung (340) so ausgebildet sind, dass im Betrieb eine Arbeitsflüssigkeitsströmung (344) von der Arbeitsflüssigkeitszuleitung (338) zu der Arbeitsflüssigkeitsableitung (340) in dem Gehäuse (330) stattfindet,
wobei die Arbeitsflüssigkeitszuleitung (338) mit der Wärmepumpe gekoppelt ist, um im Betrieb der Wärmepumpe Arbeitsflüssigkeit zu leiten, die kälter ist als ein zu kondensierender Arbeitsdampf in dem Kondensierer (306),
wobei das Gehäuse (330) in Betriebsrichtung senkrecht oder schräg angeordnet ist, wobei die Arbeitsflüssigkeitszuleitung (338) oberhalb der Arbeitsflüssigkeitsableitung (340) angeordnet ist, und
wobei der Fremdgaszuführungseingang (332) unterhalb der Arbeitsflüssigkeitszuleitung (338) und oberhalb der Arbeitsflüssigkeitsableitung (340) angeordnet ist.

2. Wärmepumpe nach Anspruch 1, die ferner folgende Merkmale aufweist:
einen Verdampfer (300) zum Verdampfen von Arbeitsflüssigkeit mit einem Zulauf (310) für zu kühlende Arbeitsflüssigkeit und einem Ablauf (312) für gekühlte Arbeitsflüssigkeit,
wobei die Arbeitsflüssigkeitszuleitung (338) und die Arbeitsflüssigkeitsableitung (340) beide mit dem Zulauf (310) zu dem Verdampfer (300) oder mit dem Ablauf (312) von dem Verdampfer (300) gekoppelt sind, ober wobei die Arbeitsflüssigkeitszuleitung (338) mit dem Zulauf (310) zu dem Verdampfer (300) und die Arbeitsflüssigkeitsableitung (340) mit dem Ablauf (312) von dem Verdampfer (300) oder umgekehrt gekoppelt sind.

3. Wärmepumpe nach Anspruch 2, wobei in dem Zulauf (310) zu dem Verdampfer (300) oder in dem Ablauf (312) von dem Verdampfer (300) eine Pumpe (314) angeordnet ist, und
wobei die Arbeitsflüssigkeitszuleitung (338) in Strömungsrichtung nach der Pumpe (314) und die Arbeitsflüssigkeitsableitung (340) in Strömungsrichtung vor der Pumpe (314) mit dem Zulauf (310) bzw. dem Ablauf (312) des Verdampfers (300) gekoppelt sind.

4. Wärmepumpe nach einem der vorhergehenden Ansprüche,
bei der ein Verdampfer (300) vorgesehen ist, der mit einem Wärmetauscher (398) gekoppelt ist, wobei der Wärmetauscher (398) einen Zulauf in ein zu kühlendes Gebiet und einen Rücklauf von dem zu kühlenden Gebiet aufweist,
wobei die Arbeitsflüssigkeitszuleitung (338) und die Arbeitsflüssigkeitsableitung (340) beide mit dem Zulauf in das zu kühlende Gebiet oder mit dem Rücklauf von dem zu kühlenden Gebiet gekoppelt sind, oder wobei die Arbeitsflüssigkeitszuleitung (338) mit dem Zulauf in das zu kühlende Gebiet und die Arbeitsflüssigkeitsableitung mit dem Rücklauf von dem zu kühlenden Gebiet oder umgekehrt gekoppelt sind.

5. Wärmepumpe nach Anspruch 4, wobei in dem Zulauf zu dem zu kühlenden Gebiet oder in dem Ablauf von dem zu kühlenden Gebiet eine Pumpe (314) angeordnet ist, und
wobei die Arbeitsflüssigkeitszuleitung (338) in Strömungsrichtung nach der Pumpe (314) und die Arbeitsflüssigkeitsableitung (340) in Strömungsrichtung vor der Pumpe (314) angeordnet sind.

6. Wärmepumpe nach einem der vorhergehenden Ansprüche,
bei der das Gehäuse (330) oder die Arbeitsflüssigkeitsableitung (340) ausgebildet sind, um im Betrieb der Wärmepumpe einen Pegel (391) an flüssiger Arbeitsflüssigkeit in dem Gehäuse (330) oberhalb der Arbeitsflüssigkeitsableitung (340) zu halten, so dass im Betrieb zwischen dem Fremdgaszuführungseingang (332) und der Arbeitsflüssigkeitsableitung (340) ein Bereich an flüssiger Arbeitsflüssigkeit angeordnet ist, oder
bei der das Gehäuse (330) in Betriebsrichtung senkrecht oder schräg angeordnet ist, wobei die Arbeitsflüssigkeitszuleitung (338) oberhalb der Arbeitsflüssigkeitsableitung (340) angeordnet ist, oder
bei der die Gasfalle einen Fremdgasanreicherungsraum (358) aufweist, der oberhalb der Arbeitsflüssigkeitszuleitung (338) angeordnet ist, und wobei die Gaspumpe (342) mit dem Fremdgasanreicherungsraum (358) gekoppelt ist, um das Gas aus dem Fremdgasanreicherungsraum (358) abzupumpen, oder
bei der die Gasfalle so ausgebildet ist, dass Arbeitsdampf aus dem Fremdgaszuführungseingang (332) direkt mit der Arbeitsflüssigkeitsströmung (344) kondensieren kann.

7. Wärmepumpe nach Anspruch 1,
bei der die Gasfalle ein Vermittlungselement (390) aufweist, das durch die Arbeitsflüssigkeitsströmung (344) gekühlt wird, wobei das Vermittlungselement (390) so in dem Gehäuse (330) angeordnet ist, dass Arbeitsdampf aus dem Fremdgaszuführungseingang (332) an einer gekühlten Oberfläche des Vermittlungselements (390) kondensieren kann,
bei der das Vermittlungselement (390) ein Rohr ist, in das die Arbeitsflüssigkeitszuleitung (338) eingeführt ist, und
wobei das Rohr (390) an seinem unteren Ende offen ist und in einen Pegel (391) an Arbeitsflüssigkeit eingetaucht ist, so dass an der Rohroberfläche (390) kondensierte Arbeitsflüssigkeit in den Pegel an Arbeitsflüssigkeit läuft.

8. Wärmepumpe nach einem der vorhergehenden Ansprüche,
bei der das Gehäuse (330) länglich geformt ist und mit Füllkörpern gefüllt ist, um im Betrieb eine turbulente Arbeitsflüssigkeitsströmung (344) zu erhalten.

9. Wärmepumpe nach einem der vorhergehenden Ansprüche,
bei der das Gehäuse (330) und/oder die Arbeitsflüssigkeitsableitung (340) ausgebildet ist, um im Betrieb der Wärmepumpe einen Pegel (391) an flüssiger Arbeitsflüssigkeit in dem Gehäuse (330) oberhalb der Arbeitsflüssigkeitsableitung (340) zu halten,
wobei im Betrieb zwischen dem Fremdgaszuführungseingang (332) und der Arbeitsflüssigkeitsableitung (340) ein Bereich an flüssiger Arbeitsflüssigkeit angeordnet ist, und
wobei im Betrieb die Arbeitsflüssigkeitsströmung (344) und kondensierter Arbeitsdampf, der aufgrund der Arbeitsflüssigkeitsströmung (344), die aus einer Gasmischung aus Arbeitsflüssigkeitsdampf und Fremdgas besteht, die über den Fremdgaszuführungseingang (332) zuführbar ist, kondensiert ist, in den Pegel (391) an flüssiger Arbeitsflüssigkeit laufen.

10. Wärmepumpe nach einem der vorhergehenden Ansprüche, die ferner folgende Merkmale aufweist:
eine erste Wärmepumpenstufe, die den Kondensierer (306) umfasst;
eine zweite Wärmepumpenstufe, die einen weiteren Kondensierer (506) umfasst,
wobei das Gehäuse (330) der Gasfalle einen weiteren Fremdgaszuführungseingang (334) aufweist, der mit dem weiteren Kondensierer (506) der zweiten Wärmepumpenstufe gekoppelt ist.

11. Wärmepumpe nach Anspruch 10,
bei der die erste Wärmepumpenstufe und die zweite Wärmepumpenstufe so mit dem zu kühlenden Gebiet und dem zu wärmenden Gebiet gekoppelt sind, dass im Betrieb die zweite Wärmepumpenstufe in dem weiteren Kondensierer (506) eine höhere Temperatur aufweist als in dem Kondensierer (306) der ersten Wärmepumpenstufe vorhanden ist.

12. Wärmepumpe nach einem der Ansprüche 10 oder 11,
bei der der Fremdgaszuführungseingang (332), der mit dem Kondensierer (306) der ersten Wärmepumpenstufe gekoppelt ist, in Betriebsposition oberhalb des weiteren Fremdgaszuführungseingangs (334), der mit dem weiteren Kondensierer (506) der zweiten Stufe über eine Fremdgaszuführungsleitung (525) gekoppelt ist, angeordnet ist.

13. Wärmepumpe nach einem der vorhergehenden Ansprüche,
bei der das Gehäuse (330) der Gasfalle wenigstens 10 cm lang ist, oder
bei der das Gehäuse (330) rohrförmig ist und einen Durchmesser von wenigstens 25 mm in einem Bereich der Arbeitsflüssigkeitsströmung (344) und wenigstens 50 mm in einem Fremdgasanreicherungsraum (358) aufweist, oder
bei der die Gasfalle ausgebildet ist, um die Arbeitsflüssigkeitsströmung (344) zu haben, die wenigstens kleiner oder gleich 1 % einer Hauptströmung aus einem Verdampfer (300) heraus oder wenigstens kleiner oder gleich 1 % einer Hauptströmung in den Verdampfer (300) hinein ist, oder
wobei die Arbeitsflüssigkeitszuleitung (338) mit der Wärmepumpe gekoppelt ist, um im Betrieb der Wärmepumpe Arbeitsflüssigkeit zu leiten, die kälter ist als eine Temperatur, die zu einem Sattdampfdruck eines Arbeitsdampfs gehört, der in dem Kondensierer (306) zu kondensieren ist, oder
bei der die Gasfalle einen Kühlungsbereich aufweist, durch den die Arbeitsflüssigkeitsströmung (344) verläuft, wobei in dem Kühlungsbereich die vorbeiströmende Arbeitsflüssigkeit gekühlt wird.

14. Verfahren zum Betreiben einer Wärmepumpe mit einem Kondensierer (306) zum Kondensieren von verdichtetem Arbeitsdampf; einer Gasfalle, die durch eine Fremdgaszuführung (325) mit dem Kondensierer (306) gekoppelt ist und folgende Merkmale aufweist: ein Gehäuse (330) mit einem Fremdgaszuführungseingang (332); eine Arbeitsflüssigkeitszuleitung (338) in dem Gehäuse (330); und eine Arbeitsflüssigkeitsableitung (340) in dem Gehäuse (330); und einer Gaspumpe (342) zum Abpumpen von Gas aus dem Gehäuse (330), mit folgenden Schritten:
Erzeugen einer Arbeitsflüssigkeitsströmung (344) von der Arbeitsflüssigkeitszuleitung (338) zu der Arbeitsflüssigkeitsableitung (340) in dem Gehäuse (330), und
Leiten von Arbeitsflüssigkeit in das Gehäuse (330), die kälter ist als ein zu kondensierender Arbeitsdampf in dem Kondensierer (306) ist,
wobei das Gehäuse (330) in Betriebsrichtung senkrecht oder schräg angeordnet ist, wobei die Arbeitsflüssigkeitszuleitung (338) oberhalb der Arbeitsflüssigkeitsableitung (340) angeordnet ist, und
wobei der Fremdgaszuführungseingang (332) unterhalb der Arbeitsflüssigkeitszuleitung (338) und oberhalb der Arbeitsflüssigkeitsableitung (340) angeordnet ist.

15. Verfahren zum Herstellen einer Wärmepumpe mit folgenden Merkmalen: einem Kondensierer (306) zum Kondensieren von verdichtetem Arbeitsdampf; einer Gasfalle, die durch eine Fremdgaszuführung (325) mit dem Kondensierer (306) gekoppelt ist und folgende Merkmale aufweist: ein Gehäuse (330) mit einem Fremdgaszuführungseingang (332); eine Arbeitsflüssigkeitszuleitung (338) in dem Gehäuse (330); und eine Arbeitsflüssigkeitsableitung (340) in dem Gehäuse (330); und einer Gaspumpe (342) zum Abpumpen von Gas aus dem Gehäuse (330), mit folgenden Schritten:
Ausbilden des Gehäuses (330), der Arbeitsflüssigkeitszuleitung (338) und der Arbeitsflüssigkeitsableitung (340) so, dass im Betrieb eine Arbeitsflüssigkeitsströmung (344) von der Arbeitsflüssigkeitszuleitung (338) zu der Arbeitsflüssigkeitsableitung (340) in dem Gehäuse (330) stattfindet, und
Koppeln der Arbeitsflüssigkeitszuleitung (338) mit der Wärmepumpe so, dass im Betrieb der Wärmepumpe Arbeitsflüssigkeit durch das Gehäuse (330) geleitet wird, die kälter als ein zu kondensierender Arbeitsdampf in dem Kondensierer (306) ist, wobei das Gehäuse (330) in Betriebsrichtung senkrecht oder schräg angeordnet ist,
wobei die Arbeitsflüssigkeitszuleitung (338) oberhalb der Arbeitsflüssigkeitsableitung (340) angeordnet ist, und
wobei der Fremdgaszuführungseingang (332) unterhalb der Arbeitsflüssigkeitszuleitung (338) und oberhalb der Arbeitsflüssigkeitsableitung (340) angeordnet ist.

## Claims

1. Heat pump comprising:
a condenser (306) for condensing compressed working vapor;
a gas trap coupled to the condenser (306) via a foreign gas feed inlet (325) and comprising:
a housing (330) having a foreign gas feed entrance (332);
a working liquid feed inlet (338) within the housing (330); and
a working liquid discharge outlet (340) within the housing (330); and
a gas pump (342) for pumping off gas from the housing (330),
wherein the housing (330), the working liquid feed inlet (338) and the working liquid discharge outlet (340) are configured such that during operation, a working liquid flow (344) takes place, within the housing (330), from the working liquid feed inlet (338) to the working liquid discharge outlet (340),
wherein the working liquid feed inlet (338) is coupled to the heat pump so as to direct, during operation of the heat pump, working liquid which is colder than a working vapor to be condensed within the condenser (306),
wherein the housing (330) is arranged perpendicularly or obliquely in the direction of operation, the working liquid feed inlet (338) being arranged above the working liquid discharge outlet (340), and
wherein the foreign gas feed entrance (332) is arranged below the working liquid feed inlet (338) and above the working liquid discharge outlet (340).

2. Heat pump as claimed in claim 1, further comprising:
an evaporator (300) for evaporating working liquid which comprises an intake (310) for working liquid to be cooled and a drain (312) for cooled working liquid,
wherein the working liquid feed inlet (338) and the working liquid discharge outlet (340) are both coupled to the intake (310) leading into the evaporator (300) or to the drain (312) leading out of the evaporator (300), or wherein the working liquid feed inlet (338) is coupled to the intake (310) leading into the evaporator (300), and the working liquid discharge outlet (340) is coupled to the drain (312) leading out of the evaporator (300), or vice versa.

3. Heat pump as claimed in claim 2, wherein a pump (314) is arranged in the intake (310) leading into the evaporator (300) or in the drain (312) leading out of the evaporator (300), and
wherein it is downstream from the pump (314) that the working liquid feed inlet (338) is connected to the intake (310) of the evaporator (300), and it is upstream from the pump (314) that the working liquid discharge outlet (340) is connected to the drain (312) of the evaporator (300).

4. Heat pump as claimed in any of the previous claims,
wherein an evaporator (300) is provided which is coupled to a heat exchanger (398), the heat exchanger (398) comprising an intake into an area to be cooled and a return flow from the area to be cooled,
the working liquid feed inlet (338) and the working liquid discharge outlet (340) both being coupled to the intake into the area to be cooled or to the return flow from the area to be cooled, or the working liquid feed inlet (338) being coupled to the intake into the area to be cooled and the working liquid discharge outlet being coupled to the return flow from the area to be cooled, or vice versa.

5. Heat pump as claimed in claim 4, wherein a pump (314) is arranged within the intake leading into the area to be cooled or within the drain leading out of from the area to be cooled, and wherein the working liquid feed inlet (338) is arranged downstream from the pump (314), and the working liquid discharge outlet (340) is arranged upstream from the pump (314).

6. Heat pump as claimed in any of the previous claims,
wherein the housing (330) or the working liquid discharge outlet (340) are configured to maintain, during operation of the heat pump, a level (391) of liquid working liquid within the housing (330) above the working liquid discharge outlet (340), so that during operation, an area of liquid working liquid is arranged between the foreign gas feed entrance (332) and the working liquid discharge outlet (340), or
wherein the housing (330) is arranged perpendicularly or obliquely in the direction of operation, the working liquid feed inlet (338) being arranged above the working liquid discharge outlet (340), or
wherein the gas trap comprises a foreign gas accumulation space (358) arranged above the working liquid feed inlet (338), and wherein the gas pump (342) being coupled to the foreign gas accumulation space (358) so as to pump the gas off from the foreign gas accumulation space (358), or
wherein the gas trap is configured such that working vapor from the foreign gas feed entrance (332) may directly condense with the working liquid flow (344).

7. Heat pump as claimed in claim 1,
wherein the gas trap comprises a mediation element (390) cooled by the working liquid flow (344), said mediation element (390) being arranged within the housing (330) such that working vapor from the foreign gas feed entrance (332) may condense on a cooled surface of the mediation element (390)
wherein the mediation element (390) is a pipe into which the working liquid feed inlet (338) is introduced, and
wherein the pipe (390) is open at its lower end and is immersed into a level (391) of working liquid, so that working liquid that is condensed on the pipe surface (390) flows into the level of working liquid.

8. Heat pump as claimed in any of the previous claims,
wherein the housing (330) is shaped to be elongated and is filled with fillers so as to obtain a turbulent working liquid flow (344) during operation.

9. Heat pump as claimed in any of the previous claims,
wherein the housing (330) and/or the working liquid discharge outlet (340) is configured to maintain, during operation of the heat pump, a level (391) of liquid working liquid within the housing (330) above the working liquid discharge outlet (340),
wherein an area of liquid working liquid is arranged between the foreign gas feed entrance (332) and the working liquid discharge outlet (340) during operation, and
wherein during operation, the working liquid flow (344) and condensed working vapor, which is condensed due to the working liquid flow (344) consisting of a gas mixture of working liquid vapor and foreign gas, said gas mixture being feedable via the foreign gas feed entrance (332), flow into the level (391) of liquid working liquid.

10. Heat pump as claimed in any of the previous claims, further comprising:
a first heat pump stage including the condenser (306);
a second heat pump stage including a further condenser (506),
wherein the housing (330) of the gas trap comprises a further foreign gas feed entrance (334) coupled to the further condenser (506) of the second heat pump stage.

11. Heat pump as claimed in claim 10,
wherein the first heat pump stage and second heat pump stage are coupled to the area to be cooled and to the area to be heated such that during operation, the second heat pump stage within the further condenser (506) has a temperature higher than that present within the condenser (306) of the first heat pump stage.

12. Heat pump as claimed in any of claims 10 to 11,
wherein the foreign gas feed entrance (332), which is coupled to the condenser (306) of the first heat pump stage, is arranged, in the operating position, above the further foreign gas feed entrance (334), which is coupled to the further condenser (506) of the second stage via a foreign gas feed inlet (525).

13. Heat pump as claimed in any of the previous claims,
wherein the housing (330) of the gas trap has a length of at least 10 cm, or
wherein the housing (330) is tubular and has a diameter of at least 25 mm within an area of the working liquid flow (344) and of at least 50 mm within a foreign gas accumulation space (358), or
wherein the gas trap is configured to have the working liquid flow (344) that is at least smaller than or equal to 1% of a main flow from an evaporator (300) or is at least smaller than or equal to 1% of a main flow into the evaporator (300), or
wherein the working liquid feed inlet (338) is coupled to the heat pump so as to conduct, during operation of the heat pump, working liquid that is colder than a temperature which belongs to a saturated-vapor pressure of a working vapor that is to be condensed within the condenser (306), or
wherein the gas trap comprises a cooling area through which the working liquid flows (344), the working liquid which flows past being cooled within the cooling area.

14. Method of operating a heat pump comprising a condenser (306) for condensing compressed working vapor; a gas trap coupled to the condenser (306) via a foreign gas feed inlet (325) and comprising: a housing (330) comprising a foreign gas feed entrance (332); a working liquid feed inlet (338) within the housing (330); and a working liquid discharge outlet (340) within the housing (330); and a gas pump (342) for pumping off gas from the housing (330), the method comprising:
generating a working liquid flow (344) from the working liquid feed inlet (338) to the working liquid discharge outlet (340) within the housing (330), and
directing working liquid into the housing (330), which is colder than a working vapor to be condensed within the condenser (306),
wherein the housing (330) is arranged perpendicularly or obliquely in the direction of operation, the working liquid feed inlet (338) being arranged above the working liquid discharge outlet (340), and
wherein the foreign gas feed entrance (332) is arranged below the working liquid feed inlet (338) and above the working liquid discharge outlet (340).

15. Method of producing a heat pump comprising: a condenser (306) for condensing compressed working vapor; a gas trap coupled to the condenser (306) via a foreign gas feed inlet (325) and comprising: a housing (330) comprising a foreign gas feed entrance (332); a working liquid feed inlet (338) within the housing (330); and a working liquid discharge outlet (340) within the housing (330); and a gas pump (342) for pumping off gas from the housing (330), the method comprising:
configuring the housing (330), the working liquid feed inlet (338) and the working liquid discharge outlet (340) such that during operation, a working liquid flow (344) takes place, within the housing (330), from the working liquid feed inlet (338) to the working liquid discharge outlet (340), and
coupling the working liquid feed inlet (338) to the heat pump such that during operation of the heat pump, working liquid is directed through the housing (330) which is colder than a working vapor to be condensed within the condenser (306), wherein the housing (330) is arranged perpendicularly or obliquely in the direction of operation,
wherein the working liquid feed inlet (338) is arranged above the working liquid discharge outlet (340), and
wherein the foreign gas feed entrance (332) is arranged below the working liquid feed inlet (338) and above the working liquid discharge outlet (340).

## Revendications

1. Pompe à chaleur, aux caractéristiques suivantes:
un condenseur (306) destiné à condenser la vapeur de travail comprimée;
un piège à gaz qui est couplé au condenseur (306) par une conduite d'alimentation de gaz étranger (325) et présente les caractéristiques suivantes:
un boîtier (330) avec une entrée d'alimentation de gaz étranger (332);
une conduite d'alimentation de fluide de travail (338) dans le boîtier (330); et
une conduite d'évacuation de fluide de travail (340) dans le boîtier (330); et
une pompe à gaz (342) destinée à pomper le gaz hors du boîtier (330),
dans laquelle le boîtier (330), la conduite d'alimentation de fluide de travail (338) et la conduite d'évacuation de fluide de travail (340) sont conçus de sorte que pendant le fonctionnement ait lieu une circulation de fluide de travail (344) de la conduite d'alimentation de fluide de travail (338) vers la conduite d'évacuation de fluide de travail (340) dans le boîtier (330),
dans laquelle la conduite d'alimentation de fluide de travail (338) est couplée à la pompe à chaleur pour conduire, pendant le fonctionnement de la pompe à chaleur, du fluide de travail qui est plus froid qu'une vapeur de travail à condenser dans le condenseur (306),
dans laquelle le boîtier (330) est disposé verticalement ou obliquement dans la direction de fonctionnement, dans laquelle la conduite d'alimentation de fluide de travail (338) est disposée au-dessus de la conduite d'évacuation de fluide de travail (340), et
dans laquelle l'entrée d'alimentation de gaz étranger (332) est disposée au-dessous de la conduite d'alimentation de fluide de travail (338) et au-dessus de la conduite d'évacuation de fluide de travail (340).

2. Pompe à chaleur selon la revendication 1, qui présente par ailleurs les caractéristiques suivantes:
un évaporateur (300) destiné à évaporer le fluide de travail avec une entrée (310) pour le fluide de travail à refroidir et une sortie (312) pour le fluide de travail refroidi,
dans laquelle la conduite d'alimentation de fluide de travail (338) et la conduite d'évacuation de fluide de travail (340) sont toutes deux couplées à l'entrée (310) vers l'évaporateur (300) ou à la sortie (312) de l'évaporateur (300), ou dans laquelle la conduite d'alimentation de fluide de travail (338) est couplée à l'entrée (310) vers l'évaporateur (300) et la conduite d'évacuation de fluide de travail (340) est couplée à la sortie (312) de l'évaporateur (300), ou inversement.

3. Pompe à chaleur selon la revendication 2, dans laquelle une pompe (314) est disposée dans l'entrée (310) vers l'évaporateur (300) ou dans la sortie (312) de l'évaporateur (300), et
dans laquelle la conduite d'alimentation de fluide de travail (338) est couplée, dans la direction de circulation, derrière la pompe (314) et la conduite d'évacuation de fluide de travail (340) est couplée, dans la direction de circulation, devant la pompe (314) à l'entrée (310) ou à la sortie (312) de l'évaporateur (300).

4. Pompe à chaleur selon l'une des revendications précédentes,
dans laquelle est prévu un évaporateur (300) qui est couplé à un échangeur de chaleur (398), dans laquelle l'échangeur de chaleur (398) présente une entrée vers une région à refroidir et un retour de la région à refroidir,
dans laquelle la conduite d'alimentation de fluide de travail (338) et la conduite d'évacuation de fluide de travail (340) sont toutes deux couplées à l'entrée vers la région à refroidir ou au retour de la région à refroidir, ou dans laquelle la conduite d'alimentation de fluide de travail (338) est couplée à l'entrée vers la région à refroidir et l'évacuation du fluide de travail est couplée au retour de la région à refroidir, ou inversement.

5. Pompe à chaleur selon la revendication 4, dans laquelle une pompe (314) est disposée dans l'entrée vers la région à refroidir ou dans la sortie de la région à refroidir, et
dans laquelle la conduite d'alimentation de fluide de travail (338) est disposée, dans la direction de circulation, derrière la pompe (314) et la conduite d'évacuation de fluide de travail (340) est disposée, dans la direction de circulation, devant la pompe (314).

6. Pompe à chaleur selon l'une des revendications précédentes,
dans laquelle le boîtier (330) ou la conduite d'évacuation de fluide de travail (340) sont conçus pour maintenir, pendant le fonctionnement de la pompe à chaleur, un niveau (391) de fluide de travail liquide dans le boîtier (330) au-dessus de la conduite d'évacuation de fluide de travail (340) de sorte que soit disposée, pendant le fonctionnement, entre l'entrée d'alimentation de gaz étranger (332) et la conduite d'évacuation de fluide de travail (340), une zone de fluide de travail liquide, ou
dans laquelle le boîtier (330) est disposé verticalement ou obliquement dans la direction de fonctionnement, dans laquelle la conduite d'alimentation de fluide de travail (338) est disposée au-dessus de la conduite d'évacuation de fluide de travail (340), ou
dans laquelle le piège à gaz présente un espace d'enrichissement en gaz étranger (358) qui est disposé au-dessus de la conduite d'alimentation de fluide de travail (338), et dans laquelle la pompe de gaz (342) est couplée à l'espace d'enrichissement en gaz étranger (358) pour pomper le gaz hors de l'espace d'enrichissement en gaz étranger (358), ou
dans laquelle le piège à gaz est conçu de sorte que la vapeur de travail provenant de l'entrée d'alimentation de gaz étranger (332) puisse se condenser directement par le flux de fluide de travail (344).

7. Pompe à chaleur selon la revendication 1,
dans laquelle le piège à gaz présente un élément de médiation (390) qui est refroidi par le flux de fluide de travail (344), dans laquelle l'élément de médiation (390) est disposé dans le boîtier (330) de sorte que la vapeur de travail provenant de l'entrée d'alimentation de gaz étranger (332) puisse se condenser sur une surface refroidie de l'élément de médiation (390),
dans laquelle l'élément de médiation (390) est un tuyau dans lequel est introduite la conduite d'alimentation de fluide de travail (338), et
dans laquelle le tube (390) est ouvert à son extrémité inférieure et est immergé dans un niveau (391) de fluide de travail, de sorte que le fluide de travail condensé sur la surface du tube (390) entre dans le niveau de fluide de travail.

8. Pompe à chaleur selon l'une des revendications précédentes,
dans laquelle le boîtier (330) est formé de manière allongée et est rempli de matériaux de remplissage pour obtenir un flux de fluide de travail turbulent (344) pendant le fonctionnement.

9. Pompe à chaleur selon l'une des revendications précédentes,
dans laquelle le boîtier (330) et/ou la conduite d'évacuation de fluide de travail (340) sont conçus pour maintenir, pendant le fonctionnement de la pompe à chaleur, un niveau (391) de fluide de travail liquide dans le boîtier (330) au-dessus de la conduite d'évacuation de fluide de travail (340),
dans laquelle est disposée, pendant le fonctionnement, une zone de fluide de travail liquide entre l'entrée d'alimentation de gaz étranger (332) et la conduite d'évacuation de fluide de travail (340), et
dans laquelle, pendant le fonctionnement, le flux de fluide de travail (344) et la vapeur de travail condensée, qui est condensée du fait du flux de fluide de travail (344) qui consiste en un mélange gazeux de vapeur de fluide de travail et de gaz étranger qui peut être alimenté à travers l'entrée d'alimentation de gaz étranger (332), entrent dans le niveau (391) de fluide de travail liquide.

10. Pompe à chaleur selon l'une des revendications précédentes, qui présente par ailleurs les caractéristiques suivantes:
un premier étage de pompe à chaleur qui comporte le condenseur (306);
un deuxième étage de pompe à chaleur qui comporte un autre condenseur (506),
dans laquelle le boîtier (330) du piège à gaz présente une autre entrée d'alimentation de gaz étranger (334) qui est couplée à l'autre condenseur (506) du deuxième étage de pompe à chaleur.

11. Pompe à chaleur selon la revendication 10,
dans laquelle le premier étage de pompe à chaleur et le deuxième étage de pompe à chaleur sont couplés à la région à refroidir et à la région à réchauffer de sorte que, pendant le fonctionnement, le deuxième étage de pompe à chaleur présente, dans l'autre condenseur (506), une température plus élevée que celle qui est présente dans le condenseur (306) du premier étage de pompe à chaleur.

12. Pompe à chaleur selon l'une des revendications 10 ou 11,
dans laquelle l'entrée d'alimentation de gaz étranger (332) qui est couplée au condenseur (306) du premier étage de pompe à chaleur est disposée, en position de fonctionnement, au-dessus de l'autre entrée d'alimentation de gaz étranger (334) qui est couplée à l'autre condenseur (506) du deuxième étage par l'intermédiaire d'une conduite d'alimentation de gaz étranger (525).

13. Pompe à chaleur selon l'une des revendications précédentes,
dans laquelle le boîtier (330) du piège à gaz est d'une longueur d'au moins 10 cm, ou
dans laquelle le boîtier (330) est tubulaire et présente un diamètre d'au moins 25 mm dans une zone de la circulation de fluide de travail (344) et d'au moins 50 mm dans un espace d'enrichissement en gaz étranger (358), ou
dans laquelle le piège à gaz est conçu pour avoir un flux de fluide de travail (344) qui est au moins inférieur ou égal à 1% d'un flux principal sortant d'un évaporateur (300) ou au moins inférieur ou égal à 1% d'un flux principal vers l'évaporateur (300), ou
dans laquelle la conduite d'alimentation de fluide de travail (338) est couplée à la pompe à chaleur pour conduire, pendant le fonctionnement de la pompe à chaleur, du fluide de travail qui est plus froid qu'une température qui appartient à une pression de vapeur saturée d'une vapeur de travail qui doit être condensée dans le condenseur (306), ou
dans laquelle le piège à gaz présente une zone de refroidissement à travers laquelle circule le flux de fluide de travail (344), dans laquelle le fluide de travail circulant est refroidi dans la zone de refroidissement.

14. Procédé permettant de faire fonctionner une pompe à chaleur avec un condenseur (306) destiné à condenser de la vapeur de travail comprimée; un piège à gaz qui est couplé par une conduite d'alimentation de gaz étranger (325) au condenseur (306) et présente les caractéristiques suivantes: un boîtier (330) avec une entrée d'alimentation de gaz étranger (332); une conduite d'alimentation de fluide de travail (338) dans le boîtier (330); et une conduite d'évacuation de fluide de travail (340) dans le boîtier (330); et une pompe à gaz (342) destinée à pomper le gaz hors du boîtier (330), aux étapes suivantes consistant à:
générer un flux de fluide de travail (344) de la conduite d'alimentation de fluide de travail (338) vers la conduite d'évacuation de fluide de travail (340) dans le boîtier (330), et
conduire le fluide de travail vers le boîtier (330), qui est plus froid qu'une vapeur de travail à condenser dans le condenseur (306),
dans lequel le boîtier (330) est disposé verticalement ou obliquement dans la direction de fonctionnement, dans lequel la conduite d'alimentation de fluide de travail (338) est disposée au-dessus de la conduite d'évacuation de fluide de travail (340), et
dans lequel l'entrée d'alimentation en gaz étranger (332) est disposée au-dessous de la conduite d'alimentation de fluide de travail (338) et au-dessus de la conduite d'évacuation de fluide de travail (340).

15. Procédé de fabrication d'une pompe à chaleur aux caractéristiques suivantes: un condenseur (306) destiné à condenser la vapeur de travail comprimée; un piège à gaz qui est couplé par une conduite d'alimentation de gaz étranger (325) au condenseur (306) et présente les caractéristiques suivantes: un boîtier (330) avec une entrée d'alimentation de gaz étranger (332); une conduite d'alimentation de fluide de travail (338) dans le boîtier (330); et une conduite d'évacuation de fluide de travail (340) dans le boîtier (330); et une pompe à gaz (342) destinée à pomper du gaz hors du boîtier (330), aux étapes suivantes consistant à:
former le boîtier (330), la conduite d'alimentation de fluide de travail (338) et la conduite d'évacuation de fluide de travail (340) de sorte que pendant le fonctionnement ait lieu un flux de fluide de travail (344) de la conduite d'alimentation de fluide de travail (338) vers la conduite d'évacuation de fluide de travail (340) dans le boîtier (330), et
coupler la conduite d'alimentation de fluide de travail (338) à la pompe à chaleur de sorte que soit conduit, pendant le fonctionnement de la pompe à chaleur, du fluide de travail à travers le boîtier (330), qui est plus froid qu'une vapeur de travail à condenser dans le condenseur (306), où le boîtier (330) est disposé verticalement ou obliquement dans la direction de fonctionnement,
dans lequel la conduite d'alimentation de fluide de travail (338) est disposée au-dessus de la conduite d'évacuation de fluide de travail (340), et
dans lequel l'entrée d'alimentation de gaz étranger (332) est disposée au-dessous de la conduite d'alimentation de fluide de travail (338) et au-dessus de la conduite d'évacuation de fluide de travail (340),
